(19) Europäisches Patentamt
European Patent Office
Office européen des brevets

(11) **EP 1 730 482 B1**

(12) **EUROPÄISCHE PATENTSCHRIFT**

(45) Veröffentlichungstag und Bekanntmachung des Hinweises auf die Patenterteilung:
**15.06.2011 Patentblatt 2011/24**

(21) Anmeldenummer: 05707340.5

(22) Anmeldetag: **11.02.2005**

(51) Int Cl.:
**G01K 17/06** (2006.01)

(86) Internationale Anmeldenummer:
**PCT/EP2005/001397**

(87) Internationale Veröffentlichungsnummer:
**WO 2005/085784 (15.09.2005 Gazette 2005/37)**

(54) **BESTIMMUNG DES WÄRMEANSCHLUSSWERTES EINES GEBÄUDES**

DETERMINING THE HEAT LOAD OF A BUILDING

DÉTERMINER LA CHARGE THERMIQUE D'UN BÂTIMENT

(84) Benannte Vertragsstaaten:
**DE ES FR GB IT**

(30) Priorität: **20.02.2004 DE 102004008521**

(43) Veröffentlichungstag der Anmeldung:
**13.12.2006 Patentblatt 2006/50**

(73) Patentinhaber:
• **Testo AG**
**75853 Lenzkirch (DE)**
• **Donath, Martin**
**18211 Nienhagen (DE)**

(72) Erfinder:
• **DONATH, Martin**
**18211 Nienhagen (DE)**

• **HOYER, Knut**
**78056 Villingen-Schwenningen (DE)**

(74) Vertreter: **Schmuckermaier, Bernhard**
**Westphal, Mussgnug & Partner**
**Patentanwälte**
**Herzog-Wilhelm-Strasse 26**
**80331 München (DE)**

(56) Entgegenhaltungen:
**DE-A1- 2 753 485      DE-A1- 10 062 581**
**DE-A1- 10 062 581      US-A- 4 054 408**
**US-A- 4 621 528**

**EP 1 730 482 B1**

## Beschreibung

Die Erfindung betrifft ein Verfahren und eine Vorrichtung zum Bestimmen des Wärmeanschlusswertes (auch bekannt als Heizlast) eines durch eine Heizanlage beheizten Gebäudes, wobei die Heizanlage abgaserzeugend durch Brennstoff befeuert wird und beim Gebäude eine Außentemperatur sowie eine Innentemperatur auftritt.

Rationelle Energieanwendung ist aus ökonomischer und ökologischer Sicht dringend geboten. Energie sparen ist daher eine Maßnahme sowohl zur Kostensenkung als auch zum Schutz der Umwelt und kann entweder durch Verzicht auf Energie oder durch intelligente technische Lösungen erreicht werden. Das energie- und umwelttechnische Verhalten von Heizkesseln ordnet sich streng in diesen Themenkreis ein. Bisher wurden Bewertungen der Energieeffizienz vorrangig statische Betrachtungsweisen zugrunde gelegt. Die Interaktion zwischen Anlage und Gebäude erfolgt jedoch dynamisch. So weichen die von den Herstellern der Heizkessel genannten Wirkungsgrade dadurch bedingt in vielen Fällen von den im praktischen Betrieb erreichten Nutzungsgraden stark ab.

Eine Ursache liegt u. a. darin, dass aus einem verkehrt verstandenen "Sicherheits- bzw. Komfortbedürfnis" derartige Anlagen vielfach zu groß ausgelegt wurden. Dies betrifft nicht nur private Anlagen, sondern in starkem Maße auch öffentliche und kommerziell genutzte Gebäude. Die Folge der Überdimensionierung ist, dass die wärmetechnischen Anlagen während der größten Zeit der Heizperiode in unwirtschaftlichen Teillastsituationen betrieben werden. Ausgehend von dieser unbefriedigenden Situation besteht das Bedürfnis, zur Verbesserung der Energieeffizienz eines Gebäudes den tatsächlichen Wärmebedarf vom zu beheizenden Gebäude zu erfassen, um dann die Heizanlage optimal darauf abstimmen zu können.

Bisher wird bei der Ermittlung der Energieeffizienz bei der Beheizung eines Gebäudes im Bestand in der Regel folgendermaßen verfahren: Das energetisch zu bewertende Gebäude wird seinem Entstehungsjahr entsprechend einer Typologie zugeordnet. Aus Plänen oder einer Begehung erfolgt die Flächenerhebung zur Ermittlung der Gebäudegeometrie. Durch Vergleich mit Pauschalwerten aus einem Bauteilkatalog werden die zugehörigen Wärmedurchgangskoeffizienten ermittelt. Auf diesen Daten werden mittels vorhandener Softwareprogramme die Transmissions- und Lüftungswärmeverluste und daraus der Heizwärmebedarf berechnet. Die Anlageneffizienz wird auf der Grundlage eines Heizsystemkatalogs berechnet, wobei in der Bewertung aus der verwendeten Anlagentechnik und dem Baujahr auf die Energieeffizienz geschlossen wird. Aus den so ermittelten Daten wird die Gesamtbilanz hinsichtlich Endenergiebedarf, Primärenergiebedarf und $CO_2$-Emission aufgestellt und das Gebäude in eine Bewertungsskala eingeordnet.

Dieses Verfahren ist aufgrund der teilweise subjektiven Bewertungsfaktoren umstritten, so dass sich das Erfordernis nach einem Verfahren ableitet, das auf objektiver Grundlage beruht.

Die Energieeffizienz einer Heizungsanlage ist um so mehr vom Optimum entfernt, je mehr die installierte Leistung vom Gebäudeanschlusswert (Überdimensionierung) abweicht. Deshalb hat die Bestimmung des Gebäudeanschlusswertes eine zentrale Funktion in der Verbesserung der Energieeffizienz. Der Gebäudeanschlusswert ist im Falle einer Beheizung die maximale Wärmeverlustleistung des Gebäudes und wird gemäß der Vorschrift DIN 4701/VDI 2067 für die tiefste örtliche statistisch gültige Außentemperatur berechnet.

Heizungsanlagen werden auf diesen Wärmeanschlusswert konfiguriert bzw. technisch ausgelegt. Die installierte Leistung (Nennleistung) reicht aus, um bei kontinuierlichem Vorherrschen der Auslegungstemperatur unter Berücksichtigung der Windverhältnisse die Transmissions- und Lüftungsverluste des Gebäudes auszugleichen. Die für die Bereitstellung von Warmwasser notwendige Leistung wird hinzu addiert. Das spezifische Nutzerverhalten wird dabei im allgemeinen nicht berücksichtigt.

Für die messtechnische Bestimmung des Anschlusswertes werden bereits vereinzelt Verfahren angewendet, die mittels Messung des Wärmestromes diesen Anschlusswert errechnen, aber damit noch keine Aussage über die Optimierung einer Anlage ermöglichen. Weiterhin sind Verfahren zum Patent angemeldet, die z.T. die Brennstoffarbeit des Kessels in den Berechnungsgang integrieren. Bei diesen Verfahren wird jedoch das durch das Takten oder Modulieren des Kessels verursachte instationäre Verhalten einer Heizungsanlage nicht oder unzureichend betrachtet. Dieses instationäre Verhalten tritt auf, wenn die Leistungsanforderung unterhalb der installierten Leistung liegt und determiniert so die Schere zwischen tatsächlichem Nutzungsgrad und dem vom Hersteller definiertem bzw. durch Abgasanalysegeräte punktuell gemessenem Wirkungsgrad.

Aus der DE 3 730 529 A1 ist ein Verfahren zur Messung einer durch das Verhältnis von Soll-Auslastung zur Ist-Auslastung definierten Dimensionskennzahl eines Heizaggregats einer Heizungsanlage bekannt, bei der durch Messung der Soll-Auslastung mittels Messung der Außentemperatur in konstanten Zeitintervallen unter Bildung eines Mittelwertes und Multiplikation mit einem Klimafaktor sowie durch gleichzeitige Messung der Ist-Auslastung durch fortlaufende Messung der Einschaltdauer des Heizaggregates im Verhältnis zur vorgegebenen Mindestmesszeit der Wärmebedarf bestimmt wird. Nachteilig bei diesem Verfahren ist, dass ein sogenannter "Messkessel" erforderlich ist, der einen hohen Installationsaufwand erfordert.

Aus der DE 3 626 281 C2 ist ein Verfahren bekannt, bei dem die Ermittlung der Wärmemenge durch einen im Einsatz befindlichen Wärmeerzeuger erfolgt, der einen hohen Wirkungsgrad aufweist. Dabei wird ein Beobachtungszeitraum in einzelne Messzeiträume unterteilt und die Soll-Betriebsstundenzahl des Wärmeerzeugers mit hohem Wirkungsgrad auf den Messzeitraum als Funktion der Außentemperatur bezogen. Die Wärmemenge, die der im Einsatz befindlichen Wärmeerzeuger im Beobachtungszeitraum an das beheizte Objekt abgibt, wird dann aus dessen Nennleistung unter Berücksichtigung des Kesselwirkungsgrades, der Bereitschaftsverluste sowie aus der Ist-Betriebsstundenzahl errechnet. Die Nennleistung wird wiederum für einen auf den Wärmebedarf abgestimmten Wärmeerzeuger mit Hilfe des Quotienten aus Ist-Betriebsstundenzahl und Soll-Betriebsstundenzahl bestimmt. Dieses Verfahren benötigt zwar keine so starken Eingriffe in das Heizungssystem wie bei der oben genannten DE 3 730 529 A1, jedoch wird von zahlreichen Annahmen ausgegangen, die sich lediglich auf einen Durchschnittsfall beziehen, so dass der ermittelte Wärmebedarf vom tatsächlichen Wärmebedarf wiederum stark abweichen kann. So wird zum Beispiel nur der vom Hersteller einmalig ermittelte Kesselwirkungsgrad zugrunde gelegt.

Aus der DE 27 53 485 ist eine Vorrichtung zur Bestimmung des Wirkungsgrades eines Heizapparates bekannt, wobei der Wirkungsgrad aus den gemessenen Sauerstoffkonzentrationen im Abgas und der zugeführten Verbrennungsluft, sowie aus der Abgastemperatur berechnet wird. Die US 4 054 408 betrifft ein Verfahren zur Optimierung der Verbrennung in einem Ofen. Die US 4 621 528 betrifft ein Verfahren zur Bestimmung einer geeigneten Größe eines Ofens.

Aus der DE 100 62 581 ist ein Verfahren bekannt, bei dem zeitabhängig die Außentemperatur und zeitabhängig eine für eine Energieabgabe der Wärmequelle an das Heizungssystem charakteristische Größe gemessen wird und aus den gemessenen Werten der Nennwärmebedarf berechnet wird. Die Berechnung der Energieabgabe der Wärmequelle beruht jedoch ebenfalls auf verschiedenen Annahmen, die eine genaue Bestimmung der tatsächlichen Energieabgabe verfälschen.

Aufgabe der Erfindung ist es daher, ein Verfahren und eine Anordnung der eingangs genannten Art anzugeben, die diese Nachteile nicht aufweisen.

Die Aufgabe wird gelöst durch ein Verfahren gemäß Patentanspruch 1 sowie durch eine Anordnung gemäß Patentanspruch 42. Ausgestaltungen und Weiterbildungen des Erfindungsgedankens sind Gegenstand von Unteransprüchen.

Vorteil der Erfindung ist es, dass der tatsächliche Nutzungsgrad insbesondere in Abhängigkeit vom jeweiligen Nutzerverhalten in die Berechnungen der von der Heizungsanlage an das Gebäude abgegebenen Wärmearbeit eingeht. Der Erfindung liegt dabei die Erkenntnis zu Grunde, dass der Wirkungsgrad über der Zeit stark schwanken kann. Bei der vorliegenden Erfindung wird nun der Wirkungsgrad über der Zeit exakt erfasst und mit den synchron dazu gemessenen Größen über einen bestimmten Beobachtungszeitraum hinweg ausgewertet. Auf diese Weise wird eine weitgehende Unabhängigkeit des ermittelten Wärmeanschlusswertes von dynamischen Einflüssen erreicht. Der erfindungsgemäß ermittelte Wärmeanschlusswert ist daher deutlich genauer als bei allen bekannten Verfahren.

Mit der Berücksichtigung des Nutzungsgrades gemäß der Erfindung kann eine korrekte Bestimmung des Anschlusswertes und weiterführend der Energieeffizienz einer Heizungsanlage vorgenommen werden, wenn die momentane Brennstoffleistung in die Berechnung mit einbezogen wird. Aus dem Wärmeanschlusswert kann der Jahresheizwärmebedarf errechnet werden. In Weiterführung der Berechnung kann dann auch der Jahresprimärenergiebedarf aus den eingesetzten Energieträgern ermittelt werden.

Der erfindungsgemäße System zeichnet sich gegenüber den bekannten Verfahren wie folgt aus:

- Das System kann mobil ausgeführt werden und arbeitet ohne Eingriff in die Anlage selbst.
- Die installierte Anlagentechnik (z. B. Kessel) wird mittels Sensoren als Datenquelle genutzt.
- Im Falle der autarken Beheizung des Gebäudes mit einem Kessel erfolgt aus der differenzierten Analyse der Zahl und Art der Startvorgänge und Teillastsituationen des Heizkessels mittels diskreten Momentaufnahmen die rechnerische Ermittlung des Nutzungsgrades.
- Das System bietet auch die Möglichkeit, konkrete Angaben über die Transmissions- und Lüftungswärmeverluste des Gebäudes und die durch das Nutzerverhalten bedingten Wärmeverluste zu erhalten.
- Das System ermöglicht auf der Basis des messtechnisch ermittelten Wärmeanschlusswertes die Bereitstellung von objektiven Kennzahlen für die Erstellung eines Energiepasses, wie z.B. die Berechnung des Jahresenergiebedarfs.
- Das Verfahren ermöglicht die Bewertung der Anlage hinsichtlich der Optimierung des Betriebsverhaltens, der Verbesserung der Anlagenkonfiguration und der Veränderung des Nutzerverhaltens.
- Das System ist im Hinblick auf künftige Anforderungen bei der Gebäudediagnostik durch Integration weiterer Messgrößen bzw. die Verarbeitung und Interpretation von Messdaten erweiterbar.

Die Einbeziehung des instationären Verhaltens des Kessels zur Ermittlung des Wärmeanschlusswertes durch entsprechende Messtechnik und Berechnungsverfahren bietet also einen erheblichen Genauigkeitsgewinn. Erreicht wird dies im einzelnen durch die folgenden Schritte:

Es werden Brennstoffleistung, Innentemperatur (beispielsweise konstant) und Verbrennungslufttemperatur (beispielsweise konstant und/oder gleich der Innentemperatur) jeweils über der Zeit in einem Beobachtungszeitraum von bestimmter Beobachtungsdauer ermittelt, d. h. angenommen, berechnet oder gemessen. Weiterhin werden Abgaskonzentrationsparameter, Abgastemperatur und Außentemperatur jeweils über der Zeit in diesem Beobachtungszeitraum von bestimmter Beobachtungsdauer gemessen Durch eine zeitabhängige (insbesondere echtzeitabhängige, d. h. exakt synchrone) Messung der genannten Größen ist eine eindeutige zeitliche Zuordnung der einzelnen Größen zueinander gegeben, so dass daraus errechnete Größen wie etwa der Wirkungsgrad der Heizanlage ebenfalls zeitabhängig, das heißt jedem einzelnen Zeitpunkt und/oder denselben Zeitpunkten zuordenbar, errechnet werden können.

Der Wirkungsgrad der Heizanlage über der Zeit wird aus den zeitabhängigen Größen Abgaskonzentrationsparameter, Abgastemperatur und Verbrennungslufttemperatur in dem Beobachtungszeitraum sowie ggf. anderen Größen wie etwa vom Brennstoff abhängige Parameter berechnet, so dass ein Verlauf des Wirkungsgrades über der Zeit erhalten wird. Zusätzlich können auch noch weitere Parameter wie z. B. CO-Konzentration etc. ebenfalls gemessen und zur Berechnung herangezogen werden.

Des Weiteren wird aus dem Verlauf der Außentemperatur über der Zeit die mittlere Außentemperatur im Beobachtungszeitraum ermittelt. Aus dem Verlauf des Wirkungsgrades der Heizanlage über der Zeit und der Brennstoffleistung über der Zeit wird eine bei der mittleren Außentemperatur erzeugte mittlere Heizarbeit ermittelt. Damit erhält man eine Aussage darüber, bei welcher mittleren Außentemperatur welche mittlere Heizarbeit erzeugt wurde.

Aus der mittleren Heizarbeit bei der mittleren Außentemperatur im Beobachtungszeitraum wird eine bei einer minimalen mittleren Außentemperatur (z. B. tiefstes Zweitagesmittel) zu erzeugende maximale Heizarbeit unter Berücksichtigung der Heizgrenztemperatur bzw. mittleren Innentemperatur in dem Beobachtungszeitraum bzw. einer vorgegebenen Innentemperatur bestimmt. Durch Hochrechnen der mittleren Heizleistung bei einer mittleren Außentemperatur auf eine maximale Heizleistung bei einer minimalen Außentemperatur wird praktisch eine Normierung erzielt, so dass die maximale Heizleistung mit anderen Werten vergleichbar wird. Ein üblicher Wert für die minimale Außentemperatur ist -15°C, wobei als maximal zulässige Außentemperatur, bei der die Bestimmung des Wärmeanschlusswertes noch sinnvoll ist, beispielsweise 12°C angenommen wird.

Der Wärmeanschlusswert (Leistungswert bzw. Heizlast) der Heizungsanlage wird schließlich aus der maximalen Heizarbeit und der Beobachtungsdauer errechnet. Dieser ist aufgrund der streng synchronen zeitabhängigen Messwerterfassung und deren Auswertung sehr genau.

Als Abgaskonzentrationsparameter kann bei dem vorstehend beschriebenen Verfahren die Kohlenstoffdioxidkonzentration im Abgas oder die Sauerstoffkonzentration im Abgas zu Grunde gelegt werden. Beide sind leicht mit herkömmlicher Messtechnik zu bestimmen.

Die Ermittlung des Wirkungsgrades $\eta_K$ des Heizkessels wird z.B. bevorzugt anhand der Gleichung

$$\eta_K = 1 - q_{Abg} / 100$$

bzw. in %

$$\eta_K (\%) = 100 - q_{Abg}$$

$$q_{Abg} = (T_{Abg} - T_{Luft,ist}) \cdot ((KoeffA_2/(21-O_{2mess})+KoeffB)/100)$$

woraus folgt:

$$\eta_k = 1-(T_{Abgas,ist} - T_{Luft,ist}) \cdot ((KoeffA_2/(21-O_{2mess})+KoeffB)/100)$$

vorgenommen. Dabei steht $O_{2,mess}$ für die aktuelle Sauerstoffkonzentration im Abgas, $T_{abgas,ist}$ für die aktuelle Abgastemperatur, $T_{Luft,ist}$ für die aktuelle Verbrennungslufttemperatur und $Koeff_{A2}$, $Koeff_B$ für brennstoffabhängige die Brennstoffleistung charakterisierende Koeffizienten. Bei Verwendung von beispielsweise Öl oder Gas als Brennstoff liegt der Koeffizient $Koeff_{A2}$ zwischen 0,63 und 0,68 und der Koeffizient $Koeff_B$ zwischen 0,007 und 0,0011. Die Berechnung des Wirkungsgrades kann dabei auf verschiedene Weise erfolgen und ist insbesondere länderspezifisch. Während die obige Gleichung in Deutschland angewandt wird, erfolgt die Berechnung in Groß-Britannien folgendermaßen:

$$\eta_K = 100 - (K_{gr}(T_{Abgas,ist} - T_{Luft,ist})/CO_{2,ist}) + (X(2488 + 2,1 \cdot T_{Abgas,ist} - 4,2 \cdot T_{Luft,ist})/(1000 \cdot Q_{gr}),$$

wobei $K_{gr}$, X und $Q_{gr}$ brennstoffspezifische Parameter sind. Ein allgemeiner Ansatz (sogenannte Siegert-Formel) lautet wie folgt:

$$\eta_K = 100 - (f((T_{Abgas,ist} - T_{Luft,ist})/ CO_{2,ist})$$

wobei hier f ein brennstoffspezifischer Parameter ist. Bei sämtlichen gezeigten und nicht gezeigten Gleichungen zur Berechnung des Wirkungsgrades kann selbstredend die Kohlendioxidkonzentration durch eine entsprechend umgerechnete Sauerstoffkonzentration und umgekehrt ersetzt werden.

Die mittlere Heizarbeit kann aus dem über dem Beobachtungszeitraum integrierten Produkt aus Brennstoffleistung über der Zeit und Wirkungsgrad über der Zeit ermittelt werden. Vereinfacht kann entsprechend beispielsweise folgende Gleichung angewandt werden:

$$Q_{Heiz,mittel} = P_{Br,ist} \cdot \eta_K \cdot \tau$$

Die maximale Heizarbeit kann nun aus der mittleren Heizarbeit zu

$$Q_{Heiz,max} = Q_{Heiz,mittel} \cdot (T_{Heizgrenz} - T_{außen,min})/(T_{Heizgrenz} - T_{außen,mittel})$$

errechnet werden, wobei $Q_{Heiz,max}$ für die maximale Heizarbeit, $Q_{Heiz,mittel}$ für die mittlere Heizarbeit im Beobachtungszeitraum, $T_{heizgrenz}$ für die Heizgrenztemperatur (beispielsweise 15°C) bzw. mittlere Innentemperatur (beispielsweise 20°C) im Beobachtungszeitraum, $T_{außen,min}$ für die minimale Außentemperatur und $T_{außen,mittel}$ für die zum Bestimmen des Wärmeanschlusswertes gemessene mittlere Außentemperatur im Beobachtungszeitraum steht.

Der Wärmeanschlusswert P kann dann anhand der Gleichung $P = Q_{Heiz,max}/\tau$ ermittelt werden, wobei $Q_{Heiz,max}$ für die maximale Heizarbeit und $\tau$ für die Beobachtungsdauer steht.

Vorzugsweise beträgt die Beobachtungsdauer $\tau$ 24 Stunden oder ein ganzzahliges Vielfaches von 24 Stunden, so dass sowohl typische unterschiedliche Außentemperaturen als auch verschiedene Betriebszustände wie insbesondere eine Nachtabsenkung mit berücksichtigt werden. Bei der Festlegung der Beobachtungsdauer (Mess- und Berechnungszeitraum) wird davon ausgegangen, dass das Gebäude im Normalnutzungszustand quasiidentischen 24-Stunden-Zyklen unterliegt. Für den Fall eines konstanten Betriebsverhaltens der Anlage oder geringerer Genauigkeitsanforderungen können kürzere Mess- und Berechnungszeiträume wie z.B. 1-Stunden-Zyklen definiert werden. In diesem Fall können die verkürzten Zyklen wieder zu einem 24-Stunden-Zyklus hochgerechnet und der beschriebene Berechnungsgang analog fortgesetzt werden.

Für den Fall höherer Genauigkeitsanforderungen oder unterschiedlicher 24-Stunden-Zyklen können in Abhängigkeit von den typischen Betriebszuständen eines Gebäudes (z.B. Jahreszeit wie Winter, Übergang, Sommer, bzw. Nutzungszustände wie genutzt, ungenutzt oder Klimasituationen wie sonnig, bewölkt) Mehrfachzyklen, Wochen- Monats- oder Jahreszyklen als Mess- und Berechnungszeitraum dienen.

Die Durchführung von Messungen bei verschiedenen mittleren Außentemperaturen ermöglicht eine sehr genaue Ermittlung der Gebäudekennlinie, charakterisiert durch die außentemperaturabhängige Heizleistung, den Wärmeanschlusswert und die objektbezogene reale Heizgrenztemperatur.

Geeignet ist auch eine Beobachtungsdauer von 168 Stunden entsprechend einer Woche, so dass auch ein spezielles Verhalten an den Wochenenden mit erfasst werden kann.

Bei Nutzung von bereits vorhandenen Messdaten bzw. anlagenintegrierter auslesbarer Signalgeber für die energetisch relevanten Daten wie Temperaturen, Brennerbetriebsstunden, Brennerzustandsgrößen, Abgaskonzentrationsparameter kann die Datenaufnahme auch über die auslesbaren Signalgeber der Anlage oder in Kombination mit diesen einmalig messtechnisch kurzzeitig bzw. messtechnisch diskontinuierlich zur Erfassung des jeweiligen typischen Betriebsverhaltens der Anlage erfolgen.

Diese zusätzliche Datengewinnung z.B. aus der Brennersteuerung bzw. Anlagenregelung kann auch beispielsweise über 24 Stunden mit aufgezeichnet bzw. mitverarbeitet werden.

Weist die Heizanlage eine Warmwasserversorgung auf, so kann zum Bestimmen des Wärmeanschlusswertes bei der mittleren Heizarbeit auch die Heizarbeit für die Warmwasserversorgung entsprechend berücksichtigt werden.

Die mittlere Innentemperatur des Gebäudes kann entweder auf einen bestimmten Wert festgesetzt(auf zum Beispiel 20°C) oder gemessen und gemittelt werden. Kommt die Außentemperatur in den Bereich der Innentemperatur, so muss wenig oder keine Heizleistung aufgebracht werden und es kann demnach keine sinnvolle Messung des Wärmeanschlusswertes erfolgen.

Zur Berechnung des Wärmeanschlusswertes wird der aktuelle Brennstofffluss über der Zeit ermittelt bzw. gemessen. Dabei kann die Brennstoffarbeit anhand der Gleichung $Q_{Br,ist} = H_U \cdot V_{BG}$ errechnet werden, wobei $Q_{Br,ist}$ für die Brennstoffarbeit, $H_U$ für einen vom Brennstoff abhängigen Heizwert und $V_{BG}$ für den Brennstofffluss steht. Der Brennstofffluss kann dabei ohne Eingriff in das Heizungssystem ermittelt werden, indem beispielsweise von bereits vorhandenen Messeinrichtungen der aktuelle Verbrauch abgefragt wird.

Bevorzugt erfolgt die Messung von zumindest Abgaskonzentrationsparameter, Abgastemperatur und Außentemperatur sowie ggf. der Brennstoffarbeit(zum Beispiel über das Brenner-Zeit-Verhalten wie unten erläutert) synchron und diskret zu bestimmten Messzeitpunkten bzw. Messintervallen. Zu den einzelnen Messzeitpunkten bzw. Messintervallen, deren zeitliche Distanz (zum Beispiel im Sekundenbereich) wesentlich kleiner als der Beobachtungszeitraum (zum Beispiel im Tagbereich) ist, werden jeweils Messdatensätze erhalten, die leicht weiterverarbeitet und insbesondere leicht zwischengespeichert werden können. So kann beispielsweise die Integration diskret als einfache Summation ausgeführt werden.

Ist darüber hinaus, wie üblich, der Brenner getaktet, so kann aus dem zeitlichen Verlauf und/oder den aktuellen Werten von Abgaskonzentrationsparameter und/oder Abgastemperatur hergeleitet werden, ob die Heizanlage aktuell in Betrieb ist oder nicht. Somit kann durch spezielle Auswertung der vorhandenen Messdaten die Betriebszeit der Heizungsanlage ermittelt werden. Auch die Umschaltung zwischen einzelnen Stufen kann dabei über die Änderungen und/oder das Über- oder Unterschreiten von absoluten Grenzwerten ausgewertet werden.

Sehr genaue Ergebnisse bei dem Verfahren zur Bestimmung des Wärmeanschlusswertes eines durch eine Heizanlage beheizten Gebäudes werden erhalten, wenn bei der Bestimmung der mittleren Heizarbeit die durch das dynamische Betriebsverhalten bedingten wesentlichen Verluste der Wärmeerzeugung berücksichtigt werden. Durch die Erfassung der Betriebssituation über die Zeit wird in jeder "Zeitscheibe" die mittlere Heizleistung $P_h$ als Produkt aus mittlerer Brennstoffleistung $P_{Br}$ und mittlerem Wirkungsgrad $\eta_K$ bestimmt. Dabei ist es empfehlenswert, die Abstrahlungswärmeverluste in die Ermittlung des Wirkungsgrades $\eta_K$ der Heizanlage mit einfließen zu lassen, wenn sich der Kessel vollständig oder teilweise außerhalb der thermischen Hülle befindet. Die Wärmeabstrahlungsverluste entstehen durch die Wärmeabgabe über die Kesseloberfläche.

Die Abstrahlungswärmeverluste $q_{Astr}$ setzen sich zusammen aus den Strahlungsenergieverlusten $q_{s,v}$ und den Konvektionsenergieverlusten $q_{K,V}$:

$$q_{Astr} = q_{s,v} + q_{K,v}$$

Dabei gilt:

$$q_{Astr} = \int \alpha_S \cdot A(T_k - T_U) \cdot dt + \int \alpha_K \cdot A(T_k - T_U) \cdot dt$$

oder messtechnisch bedingt für die Summe der über die Zeit gemittelten Verluste z:

$$q_{Astr} = \sum_1^z \alpha_S \cdot A(T_{K,mittel,z} - T_{U,mittel,z}) \cdot \Delta t + \sum_1^z \alpha_K \cdot A(T_{K,mittel,z} - T_{U,mittel,z}) \cdot \Delta t$$

beziehungsweise

$$q_{AStr} = \sum_{1}^{z} (\alpha_S + \alpha_K) \cdot A (T_{K,mittel,z} - T_{U,mittel,z}) \cdot \Delta t$$

Dabei ist:

| | | |
|---|---|---|
| $q_{Astr} =$ | "Abstrahlungswärmeverlust" | in [kWh] |
| $q_{s,v} =$ | Strahlungsenergieverlust | in [kWh] |
| $\alpha_s =$ | Strahlungswärmeübergangskoeffizient für Kesseloberfläche | in [W/m²K] |
| $q_{K,V} =$ | Konvektionsenergieverlust | in [kWh] |
| $\alpha_K =$ | Wärmeübergangskoeffizient für Kesseloberfläche | in [W/m²K] |
| $A =$ | Kesseloberfläche | in [m²] |
| $T =$ | Zeit | in [h] |
| $T_K =$ | Temperatur Kesseloberfläche | in K oder °C |
| $T_U =$ | Raumtemperatur Kesselumgebung | in K oder °C |

Durch die Sensorik wird über die Zeit zeitlich synchron ermittelt:

| | | |
|---|---|---|
| $T_K =$ | Temperatur Kesseloberfläche | in K oder °C |
| $T_U =$ | Raumtemperatur Kesselumgebung | in K oder °C |

Die Materialkonstanten $\alpha_{K,V}$, $\alpha_{S,V}$ und die Kesseloberfläche A werden aus Datenblättern bzw. ermittelt.

Weiterhin sollte zur Erzielung genauer Ergebnisse in die Berechnung der mittleren Heizarbeit $Q_{d,ist}$ die Anfahrverlustarbeit $Q_{Verlust,Anfahr}$ einfließen, indem diese von der mittleren Brennstoffarbeit $Q_{Br}$ für die gesamte Brennerlaufzeit im quasistationären Bereich subtrahiert wird.

Mathematisch ausgedrückt bedeutet dies:

$$Q_{d,ist} = Q_{Br} - Q_{Verlust,Anfahr}$$

Dabei kann die Anfahrverlustarbeit $Q_{Verlust,Anfahr}$ unterteilt werden in eine Aufheizverlustarbeit $Q_{Verlust}(KS)$ bei einem Kaltstart der Heizanlage und einer Aufheizverlustarbeit $Q_{Verlust}(WS)$ bei einem Warmstart der Heizanlage.

Somit ergibt sich für die mittlere Heizarbeit der Heizanlage:

$$Q_{d,ist} = Q_{Br} - Q_{Verlust}(KS) - Q_{Verlust}(WS)$$

Nach einer längeren Abkühlphase ist die Abgastemperatur zum Startzeitpunkt niedriger als die Kesselwassertemperatur. Dies gilt sowohl für den Kaltstart, der einen "Heiztakt" als auch einen "Bereitschaftstakt" einleitet. In den Kaltstartphasen ist die gesamte Brennstoffarbeit erforderlich, um den Ausgangspunkt des Wärmeübergangs vom Abgas in das Kesselwasser bzw. in den Heizstrang wieder zu erreichen. Die bis dahin benötigte Brennstoffarbeit geht vollständig als Aufheizverlustarbeit $Q_{Verlust}(KS)$ in die Berechnung der mittleren Heizarbeit ein. Die Aufheizverlustarbeit bei einem Kaltstart berechnet sich demnach wie folgt:

$$Q_{Verlust}(KS) = P_{Br} \cdot t_{Aufheiz}$$

Dabei ist $t_{Aufheiz}$ die Kaltstartphasendauer und $P_{Br}$ die Brennstoffleistung.

Bei einer Warmstartphase ist dagegen die Abgastemperatur zum Startzeitpunkt höher als die Kesselwassertemperatur. Bei einer Warmstartphase sind die Anteile des Abgasverlustes für unvollständige Verbrennung gegenüber dem rein temperaturbezogenen Abgasverlust zu berücksichtigen, so dass in der Regel im Falle einer Berechnung des Wirkungsgrades $\eta_{Verlust}$(co) die unverbrannten Bestandteile miteinbezogen werden. Dies gilt im Wesentlichen für eine Konzentration von CO > 0,1%.

Somit berechnet sich die Aufheizverlustarbeit $Q_{Verlust}$(WS) während einer Warmstartphase wie folgt:

$$Q_{Verlust}(WS) = \Sigma t_{Start}(CO_{Abgas} > 0,1\%) \cdot P_{Br} \cdot \eta_{Verlust(CO)}$$

Dabei ist $t_{Start}$ die Warmstartphasendauer und $P_{Br}$ die Brennstoffleistung.

Für den Fall, dass die Heizanlage zwei oder mehr Brennstufen mit unterschiedlichen Brennstoffleistungen aufweist, kann aus dem zeitlichen Verlauf und/oder den aktuellen Werten von Abgaskonzentrationsparameter und/oder der Abgastemperatur hergeleitet werden, welche der mindestens zwei Brennstufen aktuell im Betrieb ist und welche Brennstoffleistung damit beim Bestimmen des Wärmeanschlusswertes aktuell anzuwenden ist. Die Detektion, welche Brennstufe tatsächlich in Betrieb ist, kann zum Beispiel anhand des Anstieges von Abgaskonzentrationsparametern und/oder anhand der Abgastemperatur hergeleitet werden oder aber alternativ bzw. zusätzlich anhand von Absolutwerten, die bestimmte Schwellen überschreiten.

Eine erfindungsgemäße Anordnung umfasst zumindest eine Messeinrichtung zum Messen von zumindest Abgaskonzentrationsparameter, Abgastemperatur, Außentemperatur und Ermitteln bzw. Messen der Brennstoffleistung jeweils über der Zeit in einem Beobachtungszeitraum. Weiterhin ist eine Auswerteeinrichtung vorgesehen, die sämtliche oben angeführten Auswertungen und Berechnungen durchführt. Messeinrichtung und Auswerteinrichtung können dabei in ein einziges Gerät eingebaut werden, werden aber zweckmäßigerweise zwei- oder mehrteilig ausgeführt nämlich mit mindestens einer mobilen Messeinrichtung (Datenlogger), und einer beispielsweise stationären Auswerteeinrichtung. In diesem Fall werden die Daten vor Ort gesammelt und der Auswerteeinrichtung übergeben. In gleicher Weise ist jedoch auch eine Fernabfrage möglich, über die laufend, zu bestimmten Zeitpunkten oder am Ende des Beobachtungszeitraumes Daten übertragen werden. Die Datenübertragung kann dabei drahtlos oder drahtgebunden über eine jeweilige Schnittstelle erfolgen. Schließlich ist es auch möglich, eine Auswerteeinrichtung mit mehreren Messeinrichtungen zum Messen mehrerer Gebäude zu betreiben.

Die Erfindung wird nachfolgend anhand der in den Figuren der Zeichnung dargestellten Ausführungsbeispiele näher erläutert. Es zeigt:

Figur 1     eine erfindungsgemäße Anordnung zum Bestimmten des Wärmeanschlusswertes eines durch eine Heizanlage beheizten Gebäudes,

Figur 2     den Zusammenhang zwischen der aktuellen Temperatur und der aktuellen Heizleistung einerseits und der minimalen Temperatur und der maximalen Heizleistung andererseits und

Figur 3     ein Beispiel für einen erfindungsgemäßen Verfah- rensablauf

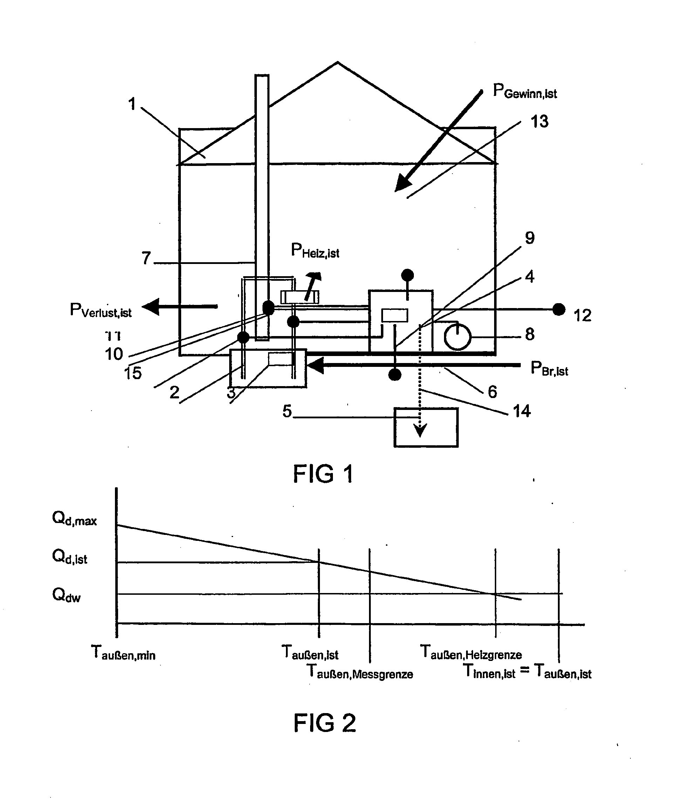

Bei der Anordnung nach Figur 1 ist in einem Gebäude 1 eine Heizanlage 2 mit einem Kessel 3 (mit nicht näher dargestelltem Brenner) zum Beheizen des Gebäudes 1 untergebracht, wobei die Heizanlage mit fossilem Brennstoff 6 wie Öl oder Gas oder nachwachsenden Brennstoffen wie Pellets befeuert wird. Die im Brennstoff 6 enthaltene Brennstoffleistung $P_{F,ist}$ wird in eine Nutzleistung $P_{Nutz,ist}$ umgewandelt, wobei die Heizanlage einen Wirkungsgrad $\eta_K$ aufweist, so dass die von der Heizanlage erzeugte Nutzleistung $P_{Nutz,ist}$ gleich dem Produkt aus dem Wirkungsgrad $\eta_K$ und der Brennstoffleistung $P_{F,ist}$ ist. Dem Gebäude 1 wird darüber hinaus Verlustleistung $P_{Verlust,ist}$ beispielsweise durch Transmissions- und Lüftungsverluste etc. entzogen, erhält aber auch beispielsweise durch Sonnenstrahlung, elektrische Verbraucher im Gebäude etc. einen zusätzlichen internen und/oder externen Leistungsgewinn $P_{Gewin,ist}$.

Der Wärmebedarf ergibt sich aus der Summe von Heizungswärme und Brauchwasserwärme. Für die Beurteilung von Anlagen mit erheblichen Brauchwasserbedarf (zum Beispiel öffentliche Bäder, Produktionsanlagen mit technologischer Wärmeabnahme usw.) muss der Brauchwasserbedarf separat bewertet werden. Zunächst wird davon ausgegangen, dass der Kessel 3 innerhalb eines Beobachtungszeitraumes (zum Beispiel 24 Stunden) eine Wärmearbeit erzeugt, die sich aus Nutzleistung und Brennerlaufzeit zusammensetzt. Die erzeugte Wärmearbeit ist mit der im gleichen Zeitraum auftretenden, beispielsweise von der Außen- und Innentemperatur abhängigen Wärmeverlustarbeit identisch. Dabei wird erfindungsgemäß berücksichtigt, dass der Kessel der Heizanlage während der Betriebszeiten des Brenners nicht mit konstantem Wirkungsgrad betrieben wird.

Eine erfindungsgemäße Datenerhebung und -auswertung lässt erkennen, wie oft der Kessel "taktet", in welcher Stufe der Kessel arbeitet und ob für den Kessel während der einzelnen Arbeitstakte ein annähernd stationärer Zustand erreicht wird. Mit den so ermittelten Daten lässt sich mit einer durch das Verfahren bedingten, von der Außentemperatur abhängigen, geringen Unsicherheit der Wärmeanschlusswert der Wärmeabnehmer bestimmen, wenn der Heizkessel im regulären Heizbetrieb arbeitet. Voraussetzung dafür ist während des Beobachtungszeitraumes ein Betrieb des Gebäudes, der dem normalen Nutzungsverhalten entspricht. Eine erfindungsgemäße Messvorrichtung misst dabei in dichter zeitlicher Abfolge (zum Beispiel in Zehn-Sekunden-Intervallen oder -Abstand) die nachfolgend dargelegten Parameter innerhalb des Beobachtungszeitraumes (von beispielsweise 24 Stunden oder einem Mehrfachen davon).

Die Messeinrichtung 4 kann beispielsweise mittels entsprechender Sensoren 10, 11, 12, 13 die Abgastemperatur, die Sauerstoffkonzentration (oder alternativ die $CO_2$-Konzentration) im Abgas, die Außentemperatur und die Innentemperatur (Raumtemperatur in einem Referenz-Raum) ermitteln. Der aktuell ermittelte Messwert wird in einem Speicher 9 gespeichert und sofort oder später in die Auswerteeinheit 5 übernommen. Zu jeder Datenabfrage werden beim Ausführungsbeispiel sekundengenau Datum und Uhrzeit (Echtzeit) mittels einer Zeitnahmeeinrichtung 8 registriert.

Nachdem die Daten durch die Messeinrichtung 4 erfasst wurden, werden sie beispielsweise nach Ablauf der Beobachtungszeit $\tau$ an eine Datenauswerteeinrichtung 5 drahtlos übermittelt. Die Messeinrichtung 4 wird über eine Schnittstelle 14, beispielsweise eine Infrarotschnittstelle, eine Funkschnittstelle oder eine drahtgebundene Schnittstelle mit der Datenauswerteeinrichtung 5 gekoppelt, um Daten von der Messeinrichtung 4 zur Datenauswerteeinrichtung 5 zu übertragen. Alternativ kann die Messeinrichtung 4, die zumindest dann mit einem Speicher 9 versehen ist, oder nur der Speicher 9 selbst vom Messort entfernt werden und an einen anderen Ort gebracht werden, an dem sich die Datenauswerteeinrichtung 5 befindet. Daneben ist es auch möglich die einzelnen Messwerte mit mehreren Messeinrichtungen, beispielsweise jeweils einer Messeinrichtung zu erfassen. Es können sich aber auch Messeinrichtung 4 und die Datenauswerteeinrichtung 5 an einem Ort und insbesondere in einem Gerät befinden.

Zur Datenauswertung wird vorzugsweise auch die tägliche Brennerlaufzeit aus der Datenaufzeichnung durch Summieren der Arbeitstaktzeiten ermittelt. Während der Datenauswertung wird für den Beobachtungszeitraum $\tau$ gezählt, wie oft der Kessel 3 startet und wie groß die Summe der Brennerlaufzeiten ist. Dazu können entweder die Einschaltzeiten der entsprechenden Magnetventile in der Heizungsanlage oder bevorzugt die Zeiten von niedrigen Sauerstoffkonzentrationen (bzw. hohen $CO_2$-Konzentrationen) während des Brennerbetriebes ausgewertet werden. Entsprechend wird auch bei mehrstufigen Brennern vorgegangen, wobei, dann zusätzlich noch zwischen den einzelnen Brennerstufen unterschieden wird. Mehrstufige Brenner bei Heizanlagen werden entweder durch verschieden große Düsen bei gleichem Druck oder durch eine Düse mit verschiedenen Betriebsdrücken erreicht.

Die Erkennung der Brennerlaufzeit kann entweder durch Abfragen eines Magnetsignals bei der Heizanlage 2 oder wiederum durch die Sauerstoffmessung bzw. Kohlendioxidmessung im Kamin 7 folgen. Zudem können auch die Werte, die zusätzlich die Brennerstartphasen kennzeichnen, wie zum Beispiel CO, berücksichtigt werden.

Untersuchungen zufolge benötigt beispielsweise ein Brenner eines Ölheizkessels bei Kaltstart 15 bis 20 Minuten, um quasistationär zu laufen und die vom Hersteller garantierten Emissionswerte zu erreichen. Das äußert sich unter anderem in annähernd zeitlich konstanten Abgastemperaturen und konstant niedrigen Emissionswerten. Wird der Kessel mit kürzeren Taktzeiten betrieben, dann befindet sich der Kessel in Betriebszuständen weit ab vom stationären Zustand und vom wärmetechnischen Optimum. Mit Hilfe der vorliegenden Erfindung ist es nun möglich, unter Nutzung der nachfolgend noch beschriebenen Messdaten Überlegungen zum Verhältnis von unter konkreten Messbedingungen realen Wirkungsgrad über der Zeit zum unter stationären Bedingungen messbaren Wirkungsgrad zu gelangen.

Für ein Gebäude gilt ein näherungsweise linearer Zusammenhang zwischen der Wärmeverlustleistung $P_{Verlust}$ und der Differenz zwischen Innen- und Außentemperatur $T_{innen,ist}$ bzw. $T_{außen,ist}$, wenn nicht außergewöhnliche Witterungsbedingungen (z.B. Sturm) zu besonderen Wärmeverlusten führen. Es wird hier davon ausgegangen, dass sich das Gebäude statisch verhält. Starker Wind, Temperaturgefälle etc. führen zu einem dynamischen Zustand, bei dem dann zum Beispiel auch das Speichervermögen des Gebäudes berücksichtigt werden muss. Der Wärmeanschlüsswert P des Gebäudes entsprechend der maximal aufzuwendenden Wärmearbeit $Q_{d,max}$ bei minimaler Außentemperatur $t_{außen,min}$ lässt sich dann entsprechend Figur 2 aus der durch das erfindungsgemäße Messverfahren ermittelten Wärmearbeit $Q_{d,ist}$ bei $T_{außen,ist}$ für eine minimale (statistische) Außentemperatur für den Standort der Anlage berechnen. Es sind somit Aussagen zum Wärmebedarf des Gebäudes für unterschiedliche minimale Außentemperaturen $t_{außen,min}$ wie zum Beispiel -10°C, -15°C, - 20°C möglich. Darüber hinaus kann auch die für die Warmwasserversorgung benötigte Wärmearbeit $Q_{w,ist}$ mit berücksichtigt werden.

Der ermittelte Anschlusswert P ist genauer, wenn eine gewisse statistische Absicherung des Ergebnisses (z.B. durch eine mehrmalige Wiederholung der Messung unter unveränderten Betriebsbedingungen oder eine genaue Ermittlung der Gebäudekennlinie bei unterschiedlichen Außentemperaturen vorgenommen wird., z.B.

1. Messung: $T_{außen,min} < T_{außen.mess,1} < -5°C$;
2. Messung: $0°C < T_{außen.mess,2} < 8°C$;
3. Messung: $T_{außen,Heizgrenz} < T_{außen.mese,3}$.

$T_{\text{außen.mess},3}$ ist dann die Außentemperatur, bei der nur noch eine Brauchwassererwärmung erfolgt.

Die rechnerische Ermittlung des Anschlusswertes ist nur dann möglich, wenn sich die Anlage auch tatsächlich im Heizbetrieb befindet.

Wie bereits oben dargelegt muss unter bestimmten Bedingungen eine Berücksichtigung der Warmwasserbereitung erfolgen. Es ist dabei zu berücksichtigen, dass vor allem bei höheren Außentemperaturen der Kessel nicht im Dauerbetrieb läuft, sondern "nur" Warmwasserbereitung erfolgt, so dass für jeden Ladevorgang des Warmwasserspeichers auch der Kesselinhalt mit aufgeheizt werden muss. Die zur Warmwasserbereitung erforderliche Energie ist in der Regel nicht bzw. unwesentlich von der Außentemperatur abhängig. Die Heizwärmearbeit ist hingegen von der Außentemperatur abhängig.

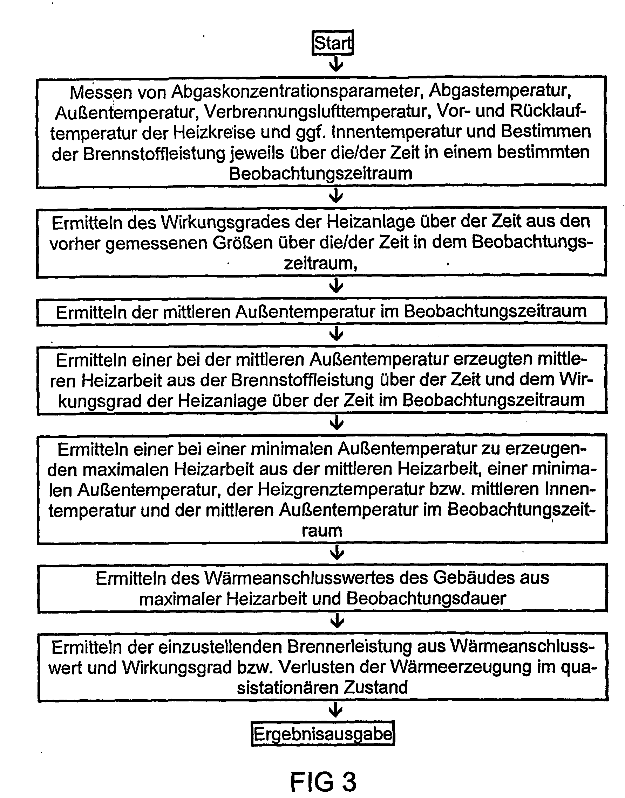

Bei dem in Figur 3 gezeigten erfindungsgemäßen Verfahren ist die Reihenfolge in gewissen Grenzen variabel. Zunächst wird die Brennstoffleistung ermittelt beispielsweise durch Verknüpfen des Brennstoffflusses mit den Einschaltstufen-Zeit-Verhalten bzw. dem Brennerstufen-Zeit-Verhalten oder durch Bestimmen der im Beobachtungszeitraum gesamten durchgesetzten Brennstoffmenge und so weiter. Zudem werden Abgaskonzentrationsparameter, Abgastemperatur, Verbrennungslufttemperatur, Außentemperatur und ggf. Innentemperatur jeweils über der Zeit in einem Beobachtungszeitraum gemessen. Einzelne vor allem konstante Messgrößen können jedoch auch einmalig bestimmt werden und dem weiteren Verfahren zugrunde gelegt werden.

Danach wird der Wirkungsgrad des Heizkessels über der Zeit aus Abgaskonzentrationsparameter, Abgastemperatur, Verbrennungslufttemperatur (z. B. Heizraumtemperatur oder Außentemperatur bzw. Lufttemperatur im Ansaugkanal) und Brennstoffleistung jeweils über der Zeit in dem Beobachtungszeitraum ermittelt. Es folgt das Ermitteln einer bei der mittleren Außentemperatur erzeugten mittleren Heizarbeit aus der Brennstoffleistung über der Zeit und dem Wirkungsgrad der Heizanlage über der Zeit in dem Beobachtungszeitraum. Danach erfolgt dann die Berechnung einer bei einer minimalen Außentemperatur zu erzeugenden maximalen Heizarbeit aus der mittleren Heizarbeit, der minimalen Außentemperatur, einer mittleren Innentemperatur und der mittleren Außentemperatur in dem Beobachtungszeitraum.

Für die energetische Bewertung einer Heizungsanlage ist entscheidend, wie viel von dem in die Anlage eingespeisten Brennstoff (Aufwand) in Heizwärme (Nutzen) umgewandelt wird, wobei bei den erforderlichen Berechnungen insbesondere auf die physikalischen Größen Leistung und Arbeit abgestellt wird. Energietechnische Prozesse laufen meistens instationär, dynamisch und kaum stationär, statisch ab.

Zur Erfassung der momentanen Betriebssituation eines Kessels im stationären Fall wird vorzugsweise die Leistung P als physikalische Größe herangezogen. Wenn Leistungen als Aufwand-Nutzen-Verhältnis miteinander verglichen werden, spricht man vom Wirkungsgrad $\eta_k$. Für die Beschreibung instationärer Situationen wird vorzugsweise die physikalische Größe Arbeit Q verwendet. Wenn Arbeiten als Aufwand-Nutzen-Verhältnis miteinander verglichen werden, spricht man vom Nutzungsgrad $\eta_N$. Dabei gilt $\eta_N \leq \eta_k$.

Arbeit ist eine über einen bestimmten Zeitraum andauernde Leistung. Für den stationären Sonderfall zeitlich konstanter Leistung P berechnet sich die Wärmearbeit Q als Leistung P mal Zeit t:

$$Q = P \cdot t$$

Da die Bedingung zeitlich konstanter Leistung an technischen Anlagen nur selten erfüllt ist, muss die Arbeit berechnet werden gemäß

$$Q = \int P(t) \cdot dt$$

oder für die Durchführung praktischer Messaufgaben diskret aufbereitet

$$Q = \sum P(t) \cdot \Delta t$$

mit $\Delta t$ als Messintervall, d. h. entweder zeitlicher Abstand diskreter Messpunkte oder Zeitraum über den unter Mittelwertbildung gemessen wird.

Für die Berechnung einer mittleren Leistung $P_{n,\,\text{mittel}}(t_n)$ in einem Zeitabschnitt $\Delta t_n$ aus der Arbeit $Q_n(\Delta t_n)$ in diesem Zeitabschnitt $\Delta t_n$ gilt:

$$P(t)_{mittel} = Q_n(\Delta t_n)/\Delta t_n \qquad \text{mit } n = 1,2,...$$

Im Ansatz wird die Kesselanlage in Beziehung zum Gebäude betrachtet. Die Wärmebilanz des Gebäudes wird durch die durch Nutzer, Gebäudehülle und klimatische Bedingungen beeinflussten Transmissions- und Lüftungsverluste, interne und externe Wärmegewinne, sowie die durch die Heizung zugeführte Wärme bestimmt.

Externe Wärmegewinne werden direkt oder indirekt vor allem durch Sonneneinstrahlung bewirkt. Interne Wärmegewinne sind z.B. weitere Wärmequellen wie etwa ein eventuell innen liegender Schornstein, elektrische Verbraucher und/oder sich im Heizsystem befindende Pumpen, deren elektrische Energie in Wärme umgewandelt wird, zu berücksichtigen. Die Kesselanlage wandelt die Brennstoffenergie in Wärme um, die über ein Medium im Gebäude verteilt und an die Raumluft (Konvektion) bzw. die Gebäudesubstanz und die darin befindlichen Gegenstände oder Lebewesen (Strahlung) im übertragen wird. Die nicht übertragene Wärme verbleibt im Medium. Diese beschriebenen externen und internen Wärmegewinne (beispielsweise weitere Wärmeerzeuger und elektrischer Energieeintrag in das Gebäude) können zusätzlich in die Berechnung integriert werden. Die elektrische Hilfsenergie für die Heizungsanlage kann gleichzeitig als Faktor für die Bewertung der Energieeffizienz der Anlage zu betrachten.

Der Gesamtwärmebedarf des Gebäudes in einem definierten Zeitraum entspricht demnach der Heizarbeit, die der Kessel als Nutzarbeit zum Ausgleich der Wärmeverluste durch Transmission und Lüftung in diesem Zeitraum zu erbringen hat. Dabei ist die Nutzarbeit des Kessels die Wärmemenge, die in das Heizungssystem übertragen wird. Sie ist geringer als die Arbeit, die über den Brennstoff in den Kessel eingespeist wird. Bei der Umwandlung der Brennstoffenergie in Wärme treten Verluste auf, die durch den Nutzungsgrad $\eta_N$ berücksichtigt werden können.

Die Tagesarbeit $Q_d$ für beispielsweise einen Tag bzw. 24 h sind demnach die Summe der Arbeit für den Ausgleich der Wärmeverluste durch Transmission und Lüftung $Q_{dh}$ und der Arbeit für die Warmwasserbereitung $Q_{dw}$ an einem Tag.

$$Q_d = Q_{dh} + Q_{dw},$$

wobei $Q_{dw}$ als konstant vorausgesetzt wird. $Q_{dh}$ ändert sich entsprechend der jahreszeitlich bedingten Veränderung der Außentemperatur, so dass hier eine Variable $Q_{dhv}$ eingeführt wird.

Bei der Darstellung des Berechnungsganges wird von einem Normalnutzungszustand des Gebäudes und quasistationären Bedingungen ausgegangen. Das bedeutet, dass die Nutzer des Gebäudes sich im Beobachtungszeitraum wie immer verhalten. Das betrifft die Innentemperaturen, den Luftwechsel, den Warmwasserverbrauch und die internen Wärmegewinne. Quasistationäre klimatische Bedingungen bedeuten, dass keine extremen externen Wärmegewinne, Temperaturschwankungen oder Windstärken auftreten. Im nichtstationären Zustand können die dynamischen Einflussgrößen wie innere bzw. solare Wärmequellen, meterologisch bedingte stark schwankende Temperatur-, Wind- und Feuchtigkeitseinflüsse sowie die daraus resultierenden Speichereffekte des Gebäudes nicht mehr vernachlässigt werden. Für die Berechnung des Wärmeanschlusswertes mit dem erfindungsgemäßen System kann pauschal beispielsweise ein Aufschlag $K_{ww}$ von 15 % in den Berechnungsgang für die Wärmwasserversorgung vorgesehen werden.

Zur weiteren Einordnung des Wärmeanschlusswertes und zum Teil auch zur Ermittelung des Wärmeanschlusswertes selbst werden Daten der Gebäude- und Anlagenkonfiguration bestimmt, beispielsweise:

- Tiefstes Zweitagesmittel (zum Beispiel: -15°C entnommen einer etwa nach Postleitzahlen geordneten Tabelle)
- Gebäudebezogene Daten wie Speicherverhalten, Nutzungsart, Lage (zum Beispiel: Mehrfamilienhaus, Hanglage, Niedrigenergiehaus)
- Standort der Heizanlage zur Berücksichtigung der Strahlungsverluste (zum Beispiel: Keller, innerhalb/außerhalb der thermischen Hülle)
- Daten zum Wärmeerzeuger insbesondere Medium der Erzeugung und Übertragung (zum Beispiel: Heizöl extra leicht; Wasser oder Luft)
- Vorhandensein einer Wassererwärmung (zum Beispiel ja)
- Daten zum Brenner einschließlich Angaben zu dessen Leistung (zum Beispiel: 120 KW, Heizöl extra leicht, ohne Vorwärmung)
- Daten zur Luftzuführung des Brenners (zum Beispiel: Raumluft)
- Daten zum Energieträger (zum Beispiel: Heizöl extra leicht)
- Daten zu den Brennerstufen (zum Beispiel: Anzahl 2, Düsengröße 2,0 gph, Drücke: 11 und 22 bar bzw. 8 kg/h und 11 kg/h)

Bei Messaufgaben mit hoher Genauigkeit kann der Einsatz von zusätzlichen Durchflusssensoren zweckmäßig sein, die in der Kombination mit vorhanden Sensoren für Vor- und Rücklauftemperatur die Berechnung von Teilverlusten oder Korrekturwerten bzw. von Brauchwasserabnahmemengen während der Messwertaufnahme ermöglichen. Weiterhin können mittels Durchflusssensoren an der Brennstoffzuführung Brennstoffleistungen über die Zeit ermittelt werden, die in das Berechnungsverfahren eingehen. Zur synchronen und diskreten automatischen Datenerfassung werden mittels Messfühler bei Abtastzeitpunkten beispielsweise im 10 sec-Zeittakt über einen Beobachtungszeitraum von 24 h folgende Werte gemessen:

| | |
|---|---|
| Temperatur Abgas | $T_{Abgas}$ |
| Konzentration $O_2$ (oder $CO_2$) | $O_{2mess}$ |
| Konzentration CO (optional) | $CO_{mess}$ |
| Temperatur Verbrennungsluft | $T_{Luft}$ |
| Temperatur Außen | $T_{außen, ist}$ |
| Temperatur Innen | $T_{innen}$ |

Sämtliche erhobenen und gemessenen Daten werden zur Auswerteeinheit übermittelt, wobei jegliche Art der Datenübermittlung möglich ist. Es folgt dann die eigentliche Berechnung über den Beobachtungszeitraum (zum Beispiel 24 h). Als Berechnungsgrößen dienen dabei:

| | |
|---|---|
| Tagesarbeit, Wärmearbeit in das Gebäude aufgewendet | $Q_{d,ist}$ |
| Tagesarbeit bei Auslegungstemperatur | $Q_{d,max}$ |
| aktuelle Nutzleistung des Brenners | $P_{h,ist}$ |
| Gebäudeanschlusswert | $P$ |

Die Berechnung selbst erfolgt dabei wie nachfolgend näher erläutert.

Berechnungsschritt 1

Zunächst wird bei synchron und diskret bestimmten Abtastzeitpunkten (zum Beispiel 8640 innerhalb von 24 h) auf der Grundlage der ermittelten Brennstoffleistungen der einzelnen Brennerstufen $P_{br,1,2}$, der Abgastemperatur $T_{Abgas}$, der Sauerstoffkonzentration $O_2$ (und/oder Kohlendioxidkonzentration $CO_2$), gegebenenfalls der Kohlenmonoxidkonzentration CO, der Verbrennungslufttemperatur $T_{Luft}$, gegebenenfalls der Vorlauftemperatur $T_{Vorlauf,ist}$ und gegebenenfalls der Rücklauftemperatur $T_{Rücklauf,ist}$ die Tagesarbeit $Q_{d,ist}$ berechnet.

Die Ermittlung der Tagesarbeit für Brauchwassererwärmung $Q_w$ wird unten bei der Berücksichtigung der Warmwasserversorgung näher erläutert. Die Innentemperatur $T_{innen,ist}$ und die Außentemperatur $T_{außen,ist}$ werden aus den synchron und diskret bestimmten Abtastzeitpunkten gemittelt. Die Brennstoffleistung wird beispielsweise aus dem Zeitverlauf der Schaltzustände der Heizanlage (aus, erste Stufe ein, zweite Stufe ein) und den jeweiligen Durchflussmengen für erste und zweite Stufe (bekannt, ermittelt oder gemessen) errechnet.

Für den Fall der Berechnung von $Q_{d,ist}$ gilt im Falle einer Außentemperatur $T_{außen, ist} > T_{außen, min}$, dass die erforderliche Heizarbeit $Q_{d,ist}$ kleiner als die maximale Heizarbeit $Q_{d,max}$ ist

$$Q_{d,ist} < Q_{d,max}$$

bzw. die Leistungsanforderung (Heizleistung) $P_{h,ist}$ kleiner als die maximale Leistungsanforderung $P$ ist

$$P_{h,ist} < P$$

wobei $T_{außen,min}$ für die jeweilige Ortslage als tiefstes Zweitagesmittel definiert ist.

Für den Fall der Berechnung von $Q_{d,ist}$ über die vom Kessel entnommenen Daten gilt:

Im Falle der Situation $T_{innen,ist} > T_{außen,min}$ tritt ein ständiger Wärmeverlust des Gebäudes auf, der durch die Zufuhr von Wärme durch den Kessel über die Heizung ausgeglichen werden muss. Im Falle des stationären Zustandes ist diese Wärmeverlustleistung kontinuierlich.

Wenn $T_{außen,ist} = T_{außen,min}$, dann erfolgt im Falle der richtigen Anpassung des Kessels an den Gebäudeanschlusswert eine kontinuierliche Einspeisung von Wärme. Der Kessel arbeitet im Fall seiner korrekten Dimensionierung ständig ohne abzuschalten im Nennlastbetrieb.

Wenn $T_{außen,ist} > T_{außen,min}$ ist, sinkt die Wärmeverlustarbeit des Gebäudes. Der Kessel müsste dazu seine Leistung adäquat herunterregeln, bzw. modulieren. Dies ist jedoch nur bei neueren richtig ausgelegten und eingeregelten Anlagen in Grenzen möglich.

Ansonsten führt dieser Zustand zu einem intermittierenden Verhalten des Kessels. Während die Wärmeverlustarbeit des Gebäudes kontinuierlich abgegeben wird, kann der Brenner der verminderten Leistungsanforderung nur entsprechen, wenn er diskontinuierlich, zeitweilig arbeitet, taktet bzw. intermittiert. Damit ist die Brennerlaufzeit über einen Tag hinweg kleiner als 24h.

Die Heizarbeit des Kessels $Q_{d,ist}$ in der Messperiode ist das Produkt aus Heizleistung $P_{h,ist}$ und der Brennertaktlaufzeit $t_{Br}$.

$$Q_{d,ist} = t_{Br} \cdot P_{h,ist}$$

$t_{Br}$ wird ermittelt, indem aus den unterschiedlichen Konzentrationen von $O_2$ (oder $CO_2$) im Abgas auf den Zustand "Brenner an" ($O_2 < 21\%$) oder "Brenner aus" ($O_2 > 21\%$) geschlossen wird. Insbesondere bei modulierenden Brennern kann zusätzlich oder alternativ der zeitliche Verlauf der Abgastemperatur berücksichtigt werden, um die Leistungsabsenkung zu ermitteln.

Aus den unterschiedlichen Abgastemperaturen und $O_2$- bzw. $CO_2$-Konzentrationen wird nach dem vorbereitenden Berechnungsgang auf die einzelnen Laststufen geschlossen, so dass für den taktenden Brenner der Zustand "Brenner an in Laststufe $P_{h,ist,Stufe}$" bestimmt werden kann.

Für den intermittierenden Kessel ergibt sich unter der Annahme eines konstanten Wirkungsgrades $\eta_k$ im Falle des quasistationären Betriebs und der bekannten bzw. ermittelten Brennstoffleistung $P_{Br}$

$$P_{h,ist,stat} = P_{Br} \cdot \eta_k$$

Für den Fall der Arbeit in verschiedenen Laststufen ergibt sich:

$$Q_{d,ist} = t_{Br,1} \cdot P_{h,ist,1} + t_{Br,2} \cdot P_{h,ist,2} + \ldots \ldots + t_{Br,} \cdot P_{h,ist,n}$$

Hierbei ist jedoch folgendes zu berücksichtigen:

Der Kessel arbeitet in unterschiedlichen Lastzuständen mit unterschiedlichen Wirkungsgraden. Es sind die Brennerstarts in der Anfangsphase durch niedrige Wirkungsgrade gekennzeichnet, sowie bei stillstandsbedingten und sicherheitsbedingten Kessellüftungsphasen Bereitschaftsverluste durch ausströmendes Abgas zu verzeichnen.

Weiterhin sind Strahlungsverluste einzubeziehen, wenn sich der Kessel nicht innerhalb der thermischen Hülle befindet, bzw. zusätzliche Wärmegewinne, wenn der Schornstein innerhalb des Gebäudes positioniert ist. Die Heizarbeit des Kessels ergibt sich als Brennstoffarbeit $Q_{Br}$ vermindert um alle auftretenden Verlustarbeiten. Bei unvollständiger Verbrennung erniedrigt sich der Wirkungsgrad, was sich an einem erhöhten CO- bzw HC-Gehalt zeigt. Daraus wird der Nutzungsgrad $\eta_N$ definiert. Die korrekte Berechnung von $\eta_N$ erfordert weitere Berechnungsschritte.

Dabei gilt:

$$Q_{d,ist} = Q_{Br} \cdot \eta_N \quad bzw.$$

$$Q_{d,ist} = Q_{Br} - Q_{Verlust}$$

Gemäß erster deutscher Bundesimmissionsschutzverordnung (1. BImSchV) kann $q_{abg}$ nach folgender Näherung berechnet werden, wobei $T_{Abg}$ für die Abgastemperatur, $T_{Luft}$ für die Verbrennungslufttemperatur, $O_{2,mess}$ für Sauerstoffkonzentration steht und $KoeffA_2$, $KoeffB$ vom jeweiligen Brennstoff abhängige, entsprechenden Tabellen entnehmbare Koeffizienten sind:

$$q_{Abg} = (T_{Abg} - T_{Luft}) \cdot ((KoeffA_2 / (21 - O_{2,mess}) + KoeffB) / 100)$$

$$\eta_k = 1 - (T_{Abg} - T_{Luft}) \cdot ((KoeffA_2 / (21 - O_{2,mess}) + KoeffB) / 100)$$

Somit ergibt sich für die gesamte Brennerlaufzeit im quasi-stationären Bereich:

$$Q_{d,stat} = t_{Br} \cdot P_{Br} \cdot (1 - (T_{Abg} - T_{Luft}) \cdot ((KoeffA_2 / 21 - O_{2,mess}) + KoeffB) / 100)$$

Berechnungsschritt 2

Aus der Tagesarbeit im Beobachtungszeitraum $Q_{d,ist}$ wird die maximale Tagesarbeit für den Auslegungspunkt $Q_{d,max}$ bestimmt. Nach DIN 4701 ist die Heizungsanlage so zu dimensionieren, dass bei der Auslegungstemperatur (tiefstes Zweitagesmittel) die zugeführte Wärme gleich den Wärmeverlusten (Transmission und Lüftung) ist. Hinzu kommt ein Sockelbetrag für Warmwasser. Diese Situation wird weiter durch die Windbelastung, externe und interne Wärmequellen, das Nutzerverhalten z.B. durch die individuelle Festlegung der Innentemperatur, des Luftwechsels und des Warmwasserverbrauchs sowie das Speicher-Vermögen des Gebäudes beeinflusst.

Kann der Anteil für die Brauchwassererwärmung nicht ermittelt werden, wird bei dieser Betrachtung wird der Sockelbetrag für Brauchwassererwärmung mit beispielsweise 15% des Heizungsbedarfs vereinfacht angesetzt. Weitere Einflüsse werden vernachlässigt. Es kann jedoch auch eine gesonderte Warmwassermessung oder Produktionswärmemessung erfolgen.

Im Fall des Vorherrschens der Auslegungstemperatur ist die Verlustleistung gleich der aufzubringenden Nutzwärmeleistung bzw. innerhalb von 24h die Tagesverlustarbeit gleich der Nutzwärmearbeit. In diesem Fall läuft der Kessel kontinuierlich mit Nennlast. Die Brennstoffleistung wird um den Wirkungsgrad vermindert in Wärmeleistung umgewandelt.

Erfindungsgemäß wird auch ein Verfahren und ein System zur Verfügung gestellt, um auch bei höheren Außentemperaturen als der Auslegungstemperatur innerhalb des Beobachtungszeitraumes (zum Beispiel 24h) die notwendige Kesselleistung zu bestimmen. Dabei gilt: Bei Vorherrschen der Auslegungstemperatur ist die maximale Leistung bzw. die maximale Tagesarbeit $Q_{d,max}$ erforderlich, beim Zustand Innentemperatur gleich Außentemperatur ist die Heizleistung gleich null.

Es ergibt sich gemäß Figur 2 ein weitgehend linearer Zusammenhang, wobei bei einer mittleren Außentemperatur $T_{außen,ist}$ eine Wärmearbeit $Q_{d,ist}$ für einen Tag erforderlich ist. Die Tagesarbeit für die Brauchwassererwärmung $Q_{dw}$ wird als konstant vorausgesetzt.

Mit der Bestimmung des Punktes ($Q_{d,ist}$; $T_{außen,ist}$) kann mit dem Punkt ($T_{Heizgrenze}$ bzw. $T_{innen,ist} = T_{außen,ist}$) der Punkt ($Q_{d,max}$) bei $T_{außen,min}$ bestimmt werden.

$$Q_{d,max} = Q_{d,ist} (T_{Heizgrenze} - T_{außen,min}) / (T_{Heizgrenze} - T_{außen,ist})$$

Unter Berücksichtigung der Warmwasserversorgung gilt:

$$Q_{d,max} = Q_{d,ist} \, (T_{Heizgrenze} - T_{außen,min}) / (T_{Heizgrenze} - T_{außen,ist})$$
$$- Q_{dw} \, (T_{Heizgrenze} - T_{außen,min}) / (T_{Heizgrenze} - T_{außen,ist}$$

Berechnungsschritt 3

Aus der maximalen Tagesarbeit $Q_{d,max}$ wird der Gebäudeanschlusswert P wie folgt bestimmt: Der Gebäudeanschlusswert entspricht der maximalen Heizleistung, die erforderlich ist, um bei der dem tiefsten Zweitagesmittel entsprechenden Außentemperatur und der ortsüblichen durchschnittlichen Windstärke im Gebäude die gewünschte Innentemperatur und die gewünschte Brauchwarmwassermenge zu halten und damit die Transmissionswärmeverluste, Lüftungswärmeverluste und Verluste durch das abfließende Brauchwarmwasser auszugleichen.
Der Gebäudeanschlusswert P als maximale Leistung wird aus der Tagesarbeit $Q_{d,max}$ berechnet zu

$$P = Q_{d,max} / 24$$

Die einzustellende Brennerleistung ist um den Wirkungsgrad und ggf. eine Sicherheit für die Brauchwassererwärmung $K_{ww}$ zu erhöhen:

$$P_{Br} = P / (1 - (T_{Abgas} - T_{Luft}) \cdot ((KoeffA_2 / (21 - O_{2mess}) + KoeffB) / 100)) + K_{WW}$$

$$K_{WW} = z.B.15\%$$

Im Folgenden wird gezeigt, wie die Tagesarbeit $Q_{d,ist}$ und damit der Gebäudeanschlusswert P genauer bestimmt werden können. Hierzu werden die Verluste bei der Verbrennung im quasi-stationären Zustand sowie die Anfahrverluste berücksichtigt. Bei der Berechnung dieser Verluste als rechnerische Verknüpfung der gemessenen Daten wird von folgenden Annahmen ausgegangen:

- In der Phase des quasistationären Zustandes erfolgt die Verbrennung im Normbereich bei quasikonstanten Parametern.
- Kesselstarts sind in Kaltstarts und Warmstarts zu unterscheiden.
- Die Stillstandsverluste werden in der Arbeitsphase bei Start des Kessels ausgeglichen, so dass die für diesen Ausgleich erforderliche Arbeit zu berechnen ist.
- Ein Wärmeübergang vom Abgas in das Kesselwasser findet nur statt, wenn die Abgastemperatur messbar höher als die Kesselwassertemperatur ist.
- Die Kesselwassertemperatur ist das Mittel aus Vor- und Rücklauftemperatur direkt am Kesseleingang oder -ausgang gemessen. Gegebenenfalls erfolgt eine kesselbaubedingte Messwertaufnahme.
- Bereitschaftsverluste entstehen durch Kesselstarts, die nur zu einer Temperaturerhöhung des Kesselwassers selbst, aber nicht zu einem Wärmeeintrag in das Gebäude führen. Ein Wärmeeintrag in das Gebäude erfolgt nur, wenn sich die Temperatur im Heizstrang bei einem Kesseltakt messbar erhöht.
- Die Abstrahlungswärmeverluste des Kessels treten auf, wenn die Kesseloberflächentemperatur höher als die Umgebungstemperatur des Kessels ist, sind aber bei neuen Kesseln durch gute Isolierung relativ gering. Befindet sich der Kessel in der thermischen Hülle, geht diese Wärme auch nicht verloren.

Bei der Berechnung der Tagesarbeit $Q_{d,ist}$ wird von folgender Formel ausgegangen:

$$Q_{d,ist} = Q_{d,stat} - Q_{Verlust}(KS) - Q_{Verlust}(WS)$$

Dabei steht $Q_{d,stat}$ für die Tagesarbeit für die gesamte Brennerlaufzeit im quasistationären Bereich, $Q_{Verlust}$ (KS) für die Aufheizverlustarbeit während der Kaltstartphasen und $Q_{Verlust}$ (WS) für die Aufheizverlustarbeit während der Warmstartphasen.

Die Verbrennung während eines Kesseltaktes im quasistationären Bereich erfolgt im Normalbereich der Abgaszusammensetzung. Dies bedeutet, dass Kohlenmonoxid sowie Rußanteile vernachlässigbar sind. In dieser Betriebsphase ist die Abgastemperatur höher als die Kesselwassertemperatur. Die erzeugte Wärme geht also in das Kesselwasser über.

Die Tagesarbeit $Q_{d,stat}$ berechnet sich für die gesamte Brennerlaufzeit im quasistationären Bereich gemäß der Formel

$$Q_{d,stat} = \Sigma t_{Br} \cdot P_{Br} \cdot \eta_k$$

Dabei stellt $t_{Br}$ die Brennerlaufzeit dar. Die Brennlaufzeit $t_{Br}$ wird ermittelt, indem aus den unterschiedlichen Konzentrationen von $O_2$ (oder $CO_2$) im Abgas auf den Zustand "Brenner an" ($O_2 < 21$ %) oder "Brenner aus" ($O_2 > 21$ %) geschlossen wird. Insbesondere bei modulierenden Brennern kann zusätzlich oder alternativ der zeitliche Verlauf der Abgastemperatur berücksichtigt werden, um die Leistungsabsenkung zu ermitteln. $\eta_k$ steht für den Wirkungsgrad des Kessels. Für $\eta_k$ gilt:

$$\eta_k = 1 - q_{Abg} - q_{CO} - q_{Astr}$$

Der Abgasverlust $q_{Abg}$ ist der Verlust, der durch den Unterschied des Wärmeinhaltes der Abgase im Schornstein und der Verbrennungsluft verursacht wird.

Der Verlust durch unverbrannte Gase $q_{co}$ ist im Wesentlichen auf das verbleibende CO zurückzuführen und tritt in Anfahr- und Abschaltphasen sowie bei falsch eingestellten Brennern auf. Schon geringe CO-Gehalte bedeuten erhebliche Energieverluste. Im quasistationären Betrieb ist dieser Verlust vernachlässigbar.

Der Wärmeverlust über die Kesseloberfläche $q_{Astr}$ ist besonders bei älteren Kesseln als signifikant zu berücksichtigen und wird ggf. in die Berechnung integriert, wenn sich der Kessel außerhalb der thermischen Hülle befindet. Es gilt bei Vernachlässigung von $q_{Astr}$ für die weitere Berechnung von $Q_{d,stat}$:

$$\eta_k = 1 - q_{Abg}$$

Gemäß 1. BImSchV kann $q_{Abg}$ nach folgender Näherung berechnet werden:

$$q_{Abg} = (T_{Abg} - T_{Luft}) \cdot ((KoeffA_2/(21 - O_{2mess}) + KoeffB)/100)$$

woraus folgt:

$$\eta_k = 1 - (T_{Abgas} - T_{Luft}) \cdot ((KoeffA_2(21 - O_{2mess}) + KoeffB)/100)$$

somit ergibt sich für die gesamte Brennlaufzeit im quasistationären Bereich:

$$Q_{d,stat} = t_{Br} \cdot P_{ur} \cdot (1 - (T_{Abgas} - T_{Luft}) \cdot ((KoeffA_2 / (21 - O_{2mess}) + KoeffB) / 100)$$

Dabei entspricht $T_{Abgas}$ der Abgastemperatur und $T_{Luft}$ der Temperatur der Verbrennungsluft. $KoeffA_2$ und KoeffB sind vom jeweiligen Brennstoff abhängige, entsprechenden Tabellen entnehmbare Koeffizienten. Bei $O_{2mess}$ handelt es sich um die gemessene Sauerstoffkonzentration.

Im Folgenden wird die Ermittlung der Aufheizverlustarbeit $Q_{Verlust}$ (KS) während der Kaltstartstartphasen der Heizanlage beschrieben:

Eine Kaltstartphase zeichnet sich dadurch aus, dass die Abgastemperatur nach längerer Auskühlphase zum Startzeitpunkt niedriger als die Kesselwassertemperatur ist. Dies gilt sowohl für eine Kaltstartphase, die einen "Heiztakt" als auch einen "Bereitschaftstakt" einleitet.

Beim Aufheizvorgang während der Kaltstartphasen ist die gesamte Brennstoffarbeit erforderlich, um den Ausgangspunkt des Wärmeübergangs vom Abgas in das Kesselwasser wieder zu erreichen. Die bis dahin benötigte Brennstoffarbeit geht vollständig als Aufheizverlustarbeit $Q_{Verlust}$ (KS) in die Berechnung der Tagesarbeit $Q_{d,ist}$ ein.

Die Berechnung von $O_{Verlust}$ (KS) geht von folgenden Annahmen aus:

1. Die Aufheizarbeit pro Takt $Q_{TaktAufheiz}$ ist gleich der Aufheizverlustarbeit $O_{Verlust}$ (KS) des Kessels pro Takt.

$$Q_{TaktAufheiz} = Q_{Verlust}(KS)$$

2. Die mittlere Kesselwassertemperatur ist im Messzeitraum gleich dem Mittel zwischen mittlerer Vorlauftemperatur $T_{Vorlauf}$ und mittlerer Rücklauftemperatur $T_{Rücklauf}$. Eine Kaltstartphase (Aufheizphase) $T_{Aufheiz}$ für den "Heiztakt" ist beendet, wenn die Abgastemperatur $T_{Abgas}$ größer als die mittlere Kesselwassertemperatur ist. Von diesem Moment an liefert die Anlage nutzbare Arbeit.

$$Q_{Verlust}(KS) = \Sigma t_{Aufheiz}(T_{Abgas} < \tfrac{1}{2}(T_{Vorlauf} + T_{Rücklauf})) \cdot P_{Br}$$

3. Für den "Bereitschaftstakt" gilt, dass die Kaltstartphase (Aufheizphase) $t_{Aufheiz}$ einem ganzen Takt (in diesem Ausführungsbeispiel 10 Sekunden) entspricht, wenn innerhalb des Taktes keine signifikante Erhöhung der Vorlauftemperatur $T_{Vorlauf}$ feststellbar ist. Die Heizanlage hat dann bei diesem 10-Sekunden-Takt keine nutzbare Arbeit geliefert.

$$Q_{Verlust}(KS) = \Sigma t_{Aufheiz}(T_{Vorlauf} = constant) \cdot P_{Br}$$

Für die Berechnung der Aufheizarbeit und damit der Aufheizverlustarbeit $O_{Verlust}$ (KS) kann die Gesamtbrennstoffarbeit der Kaltstartphasen $P_{Br} \cdot t_{Aufheiz}$ angesetzt werden.

$$Q_{Verlust}(KS) = \Sigma t_{Aufheiz}(T_{Abgas} < \tfrac{1}{2}(T_{Vorlauf} + T_{Rücklauf}); (T_{Vorlauf} = const.)) \cdot P_{Br}$$

Die Aufheizverlustarbeit während der Kaltstartphasen berechnet sich aus der Summe der Produkte aus den Kaltstartphasen-Taktzeiten Aufheiz- und der Brennstoffleistung $P_{Br}$. Im Folgenden wird die Berechnung der Aufheizverlustarbeit $Q_{Verlust}$ (WS) während der Warmstartphasen der Heizanlage erläutert:

Hierbei ist zu berücksichtigen, dass während einer Warmstartphase die Abgastemperatur zum Startzeitpunkt der Heizanlage bereits höher ist, als die Kesselwassertemperatur.

Im Abschnitt zur Anfahrphase sind die Anteile des Abgasverlustes für unvollständige Verbrennung und für nicht verbrannten Brennstoff gegenüber dem rein temperaturbezogenen Abgasverlust wesentlich größer, so dass hier im Falle einer Berechnung des Wirkungsgrades die unverbrannten Bestandteile mit einbezogen werden.

Die unvollständige Verbrennung ist an dem im Abgasstrom enthaltenem CO- Anteil erkenn- und messbar. Der weiterhin mögliche Anteil durch brennbare Rückstände (Ruß) kann vernachlässigt werden. Es wird somit für den Warmstart der zusätzlich entstehende Verlust durch den unvollständig verbrannten Brennstoff $\eta_{Verlust(CO)}$ mit einbezogen.

CO-Gehalte bedeuten wegen des hohen Heizwertes von CO bereits Wärmeverluste. Dabei gilt für die Berechnung des Verlustes durch unverbrannte Gase:

$q_u = (V_{Atr} \cdot H_{u,CO} \cdot CO)/H_u$ Mit $H_u$ in %
$H_{u,CO}$ = Heizwert von CO in kJ/m$^3$
$H_u$ = Heizwert des Brennstoffs in kJ/m$^3$
$V_{Atr}$ = trockene Abgasmenge in m$^3$
CO = Volumengehalt CO in mg/m$^3$

bzw. für den Wirkungsgrad

$$\eta_{Verlust(CO)} = 1 - q_u$$

Der Verlust durch unverbrannte Gase während eines Brennerstarts beträgt dann:

$$Q_{Verlust,Start}(WS) = \sum t_{Start}(CO_{Abgas} > 0,1\%) \; P_{Br} \cdot \eta_{Verlust(CO)})$$

Bei der Messwertaufnahme werden nun alle CO-Werte > 0,1% als Berechnungsgrößen registriert. In einer weiteren Vereinfachung wird angenommen, dass die CO-Spitzen einen quasiidentischen Verlauf und die Form eines wie oben gezeigten rechtwinkligen Dreiecks haben. Der Verlust für $CO_{Abgas}$ > 0,1% kann dann näherungsweise wie folgt berechnet werden:

$$q_u = (V_{Atr} \cdot H_{u,CO} \cdot 1/2 \; CO_{Abgas,max})/H_u \quad mit \; H_u \; in \; \%$$

$$\eta_{Verlust(CO)} = 1 - q_u$$

$$Q_{Verlust,Start}(WS) = \sum t_{Start}(CO_{Abgas} > 0,1\%) \; P_{Br} \cdot \eta_{Verlust(CO)})$$

Aus den Vorüberlegungen folgt für die Berechnung der Tagesarbeit $Q_d$:

$$Q_{d,ist} = \sum(t_{Br,1\ldots n} \cdot P_{Br,1\ldots n} \cdot (1 - (T_{Abgas} - T_{Luft}) \cdot ((KoeffA_2/(21 - O_{2mess}) + KoeffB)/100)))$$

$$-\sum t_{Aufheiz}(T_{Abgas} < \tfrac{1}{2}(T_{Vorlauf} + T_{Rücklauf}))P_{Br}$$

$$-\sum t_{Bereitschaft}(T_{Vorlauf} = const.) \cdot P_{Br}$$

$$-\sum t_{Start}(CO_{Abgas} > 0,1\%) \cdot P_{Br} \cdot ((1 - V_{Atr} \cdot H_{u,CO} \cdot \tfrac{1}{2}CO_{Abgas,max})/H_u)$$

Wie bereits bei dem vereinfachten Berechnungsbeispiel erläutert, wird aus der Tagesarbeit $Q_{d,ist}$ die maximale Tagesarbeit $Q_{d,max}$ bestimmt. Daraufhin wird aus der maximalen Tagesarbeit $Q_{d,max}$ der Gebäudeanschlusswert P berechnet zu $P = Q_{d,max}/24$.

Die Arbeit für die Warmwasserbereitung $Q_{d,w}$ an einem Tag wurde bei der Berechnung der Tagesarbeit gemäß dem zuletzt erläuterten Beispiel und damit des Wärmeanschlusswertes aus Übersichtlichkeitsgründen zunächst nicht berücksichtigt. Bei einer vereinfachten Methode kann die Arbeit für die Warmwasserbereitung als konstant angenommen werden und zu der berechneten Tagesarbeit dazu addiert werden.

In Ausgestaltung der Erfindung kann zur Bestimmung des zusätzlichen Wärmeeintrages durch den Brennwerteffekt bei der Wärmeerzeugung durch einen Brennwertkessel die Kondensatmenge innerhalb des Messzyklus bestimmt und die bei Kondensatanfall zusätzlich gewonnene Wärme durch die Brennwertnutzung berücksichtigt werden.

Erfolgt innerhalb des Messzyklus keine Bestimmung des Kondensatanfalls, so ermöglicht die Anordnung der Sensorik eine Bewertung des Brennwerteffektes bei Heizungsanlagen. Diese Bewertung ist sowohl für Brennwertanlagen (gewünschter Effekt) als auch für Standardanlagen (unerwünschter Effekt) sinnvoll. Es erfolgt die Messung folgender Größen insbesondere zu synchron und diskret bestimmten Abtastzeitpunkten während des Brennerbetriebs:

| | | |
|---|---|---|
| Sauerstoffkonzentration | $O_{2gemittelt}$ | in % |
| Abgastemperatur | $T_{Abgas}$ | in °C |
| Rücklauftemperatur | $T_{Rücklauf}$ | in °C |

Dabei kann der Abgas-Wasserdampftaupunkt $T_{siede}$ aus der Sauerstoffkonzentration ermittelt werden. Bei jedem Abtastzeitpunkt werden während des Brennerbetriebs die Größen $T_{siede}$, $T_{Rücklauf}$, $T_{Abgas}$ zueinander ins Verhältnis gesetzt. Dabei gilt für das Auftreten des Brennwerteffektes:

$$T_{Rücklauf} < T_s$$

mit der Randbedingung (beispielhafte Annahme):

$$T_{Rücklauf} + 15K < T_{Abgas}$$

Aus dem Vergleich der Messgrößen kann auf den zeitlichen Anteil des Brennwerteffekt während des Brennerbetriebs im Messzyklus geschlossen werden. Im Fall des Brennwertkessels erlaubt dies eine Bewertung der Richtigkeit der Auslegung und Regelung. Für den Fall des Standardkessels ist das Auftreten des Brennwerteffektes unerwünscht und weist auf mögliche Schäden hin.

Darüber hinaus kann der Anteil der Heizarbeit für die Brauchwassererwärmung im Messzyklus mit der beschriebenen Messtechnik zunächst direkt bestimmt werden, wenn die Messdurchführung bei ausgeschalteter Heizung erfolgt. Dieser Fall kann bewusst herbeigeführt werden oder tritt auf, wenn die Außentemperatur höher als die Heizgrenze ist. In diesem Fall wird die gesamte Heizarbeit für die Brauchwassererwärmung verwendet. Weiterhin kann die Heizarbeit für die Brauchwassererwärmung bei der (meist vorhandenen) Existenz eines Brauchwasserspeichers ermittelt werden, indem die Größe des Speichers, die Anzahl der Ladezyklen in dem Messzyklus und die jeweiligen Temperaturerhöhungen zueinander in Beziehung gesetzt werden.

Wenn die Messungen an einem Objekt bei unterschiedlichen Außentemperaturen vorgenommen wird, wie z.B.

1. Messung: $T_{außen,min} < T_{außen.mess,1} < -5°C$;
2. Messung: $0°C < T_{außen.mess,2} < 8°C$;
3. Messung: $T_{außen,Heizgrenz} < T_{außen.mess,3}· T_{außen.mese,3}$

ist über die Bestimmung der Gebäudekennlinie sowohl die beschriebene Berechnung des Gebäudeanschlusswertes als auch der gebäudespezifischen Heizgrenze möglich. Die gebäudespezifische Heizgrenztemperatur $T_{Heizgrenz}$ wird bestimmt durch den Schnittpunkt der Linie der außentemperaturabhängigen Tageswärmearbeit mit der Linie der außentemperaturunabhängigen Tagesarbeit für die Brauchwassererwärmung.

**Patentansprüche**

1. Verfahren zum Bestimmen des Wärmeanschlusswertes eines durch eine Heizanlage beheizten Gebäudes, wobei die Heiz-anlage Abgas erzeugend durch Brennstoff befeuert wird und beim Gebäude eine Außentemperatur sowie eine Innentemperatur auftritt, mit den Schritten:

   Bestimmen der Brennstoffleistung, der Innentemperatur und der Verbrennungslufttemperatur jeweils über der Zeit in einem Beobachtungszeitraum von bestimmter Beobachtungsdauer;
   Messen von Abgaskonzentrationsparameter, Abgastemperatur und Außentemperatur jeweils über der Zeit in dem Beobachtungszeitraum;
   Ermitteln des Wirkungsgrades der Heizanlage über der Zeit aus Abgaskonzentrationsparameter, Abgastemperatur und Verbrennungslufttemperatur jeweils über der Zeit in dem Beobachtungszeitraum;
   Ermitteln der mittleren Außentemperatur und der mittleren Innentemperatur in dem Beobachtungszeitraum aus der Außentemperatur und der Innentemperatur;
   Ermitteln einer bei der mittleren Außentemperatur erzeugten mittleren Heizarbeit aus der Brennstoffleistung über der Zeit und dem Wirkungsgrad der Heizanlage über der Zeit in dem Beobachtungszeitraum;
   Ermitteln einer bei einer minimalen Außentemperatur zu erzeugenden maximalen Heizarbeit aus der mittleren Heizarbeit, der minimalen Außentemperatur, der mittleren Innentemperatur und der mittleren Außentemperatur in dem Beobachtungszeitraum; und
   Ermitteln des Wärmeanschlusswertes des Gebäudes aus der maximalen Heizarbeit und der Beobachtungsdauer.

2. Verfahren nach Anspruch 1, bei dem als Abgaskonzentrationsparameter die Sauerstoffkonzentration im Abgas gemessen wird.

3. Verfahren nach Anspruch 1, bei dem als Abgaskonzentrationsparameter die Kohlenstoffdioxidkonzentration im Abgas gemessen und ausgewertet wird.

4. Verfahren nach Anspruch 3, bei dem die Ermittlung des Wirkungsgrades $\eta_k$ der Heizanlage anhand einer länderspezifischen Gleichung erfolgt.

5. Verfahren nach Anspruch 4, bei dem die Ermittlung des Wirkungsgrades $\eta_k$ der Heizanlage anhand der Gleichung $\eta_k = 1- (T_{Abgas,ist} - T_{Luft,ist}) · ((KoeffA_2/ (21-O_{2mess}) +KoeffB) /100)$ erfolgt, wobei $O_{2mess}$ für die aktuelle Sauerstoffkonzentration im Abgas, $T_{Abgas,ist}$ für die aktuelle Abgastemperatur, $T_{Luft,ist}$ für die aktuelle Verbrennungslufttemperatur und $KoeffA_2$, $Koeff_B$ für brennstoffabhängige die Brennstoffleistung charakterisierende Koeffizienten steht.

6. Verfahren nach Anspruch 5, bei dem als Brennstoff Öl oder Gas bereitgestellt wird, der Koeffizient $Koeff_{A2}$ zwischen 0,63 und 0,68 gewählt wird und der Koeffizient $Koeff_B$ zwischen 0,007 und 0,011 gewählt wird.

7. Verfahren nach Anspruch 4, 5 oder 6, bei dem vom ermittelten Wirkungsgrad ein Korrekturwert abgezogen wird, der von dem Betriebsverhalten der Heizanlage sowie deren Installationsort und -art abhängig ist.

8. Verfahren nach einem der Ansprüche 1 bis 7, bei dem die mittlere Heizarbeit aus dem über den Beobachtungszeitraum integrierten Produkt aus Brennstoffleistung über der Zeit und Wirkungsgrad über der Zeit ermittelt wird.

9. Verfahren nach einem der Ansprüche 1 bis 7, bei dem zur Ermittlung der mittleren Heizarbeit der mittlere Wirkungsgrad in dem Beobachtungszeitraum und die mittlere Brennstoffleistung ermittelt werden, wobei dann mittlerer Wirkungsgrad und mittlere Brennstoffleistung miteinander sowie mit der Beobachtungsdauer multipliziert werden.

10. Verfahren nach einem der Ansprüche 1 bis 9, bei dem die maximale Heizarbeit anhand der Gleichung $Q_{Heiz,max}=Q_{Heiz,mittel}(T_{Heizgrenz}-T_{außen,min})/(T_{Heizgrenz}-T_{außen,mittel})$ errechnet wird, wobei $Q_{Heiz,max}$ für die maximale Heizarbeit, $Q_{Heiz,mittel}$ für die mittlere Heizarbeit im Beobachtungszeitraum, $T_{Heizgrenz}$ für die Heizgrenztemperatur, $T_{außen,min}$ für die minimale Außentemperatur und $T_{außen,mittel}$ für die zum Bestimmen des Wärmeanschlusswertes gemessene mittlere Außentemperatur im Beobachtungszeitraum steht.

11. Verfahren nach einem der Ansprüche 1 bis 10, bei dem die Berechnung des Wärmeanschlusswertes P anhand der Gleichung $P = Q_{Heiz,max}/\tau$ erfolgt, wobei $Q_{Heiz,max}$ für die maximale Heizarbeit und $\tau$ für die Beobachtungsdauer steht.

12. Verfahren nach einem der Ansprüche 1 bis 11, bei dem die Beobachtungsdauer 24 Stunden oder ein ganzzahliges Vielfaches von 24 Stunden beträgt.

13. Verfahren nach Anspruch 12, bei dem die Beobachtungsdauer 168 Stunden beträgt.

14. Verfahren nach Anspruch 12, bei dem die Beobachtungsdauer weniger als 24 Stunden beträgt und zumindest ein Teil der Messwerte auf eine Beobachtungsdauer von 24 Stunden hochgerechnet wird.

15. Verfahren nach einem der vorherigen Ansprüche, bei dem Mehrfachmessungen bei unterschiedlichen Außentemperaturen durchgeführt werden.

16. Verfahren nach einem der vorherigen Ansprüche, bei dem die Heizanlage eine Brauchwarmwasserversorgung aufweist, wobei zum Bestimmen des Wärmeanschlusswertes von der mittleren Heizarbeit ein der Heizarbeit für die Brauchwarmwasserversorgung entsprechender Korrekturwert subtrahiert und dieser Korrekturwert bei der Berechnung der maximalen Heizarbeit wieder addiert wird.

17. Verfahren nach einem der vorherigen Ansprüche, bei dem die Innentemperatur über der Zeit in dem Beobachtungszeitraum gemessen wird, und zur Festlegung der Heizgrenze die Außentemperatur gleich der mittleren Innentemperatur in dem Beobachtungszeitraum gesetzt wird.

18. Verfahren nach einem der vorherigen Ansprüche, bei dem der momentane Brennstofffluss gemessen wird und daraus die Brennstoffarbeit im Beobachtungszeitraum ermittelt wird.

19. Verfahren nach Anspruch 18, bei dem die Ermittlung der Brennstoffarbeit entsprechend der Gleichung $Q_{Br,ist} = H_U V_{BG}$ erfolgt, wobei $Q_{Br,ist}$ für die Brennstoffarbeit, $H_U$ für den vom Brennstoff abhängigen Heizwert und $V_{BG}$ für den Brennstofffluss steht.

20. Verfahren nach einem der vorherigen Ansprüche, bei dem die Messung von zumindest Abgastemperatur und Außentemperatur synchron und diskret zu bestimmten Abtastzeitpunkten erfolgt.

21. Verfahren nach einem der vorherigen Ansprüche, bei dem die Heizanlage getaktet ist, wobei aus dem zeitlichen Verlauf und/oder den aktuellen Werten von Abgaskonzentrationsparameter und/oder Abgastemperatur hergeleitet wird, ob der Brenner aktuell in Betrieb ist oder nicht.

22. Verfahren nach Anspruch 21, bei dem in dem Beobachtungszeitraum die Einschaltzeiten des Brenners mit der momentanen Brennstoffleistung zu der für den Beobachtungszeitraum resultierenden Brennstoffarbeit verknüpft werden.

23. Verfahren nach Anspruch 21 oder 22, bei dem die Heizanlage mindestens zwei Brennstufen mit unterschiedlichen Brennstoffleistungen aufweist, wobei aus dem zeitlichen Verlauf und/oder den aktuellen Werten von Abgaskonzentrationsparameter und/oder Abgastemperatur hergeleitet wird, welche der mindestens zwei Brennstufen aktuell in Betrieb ist und welche Brennstoffleistung damit beim Bestimmen des Wärmeanschlusswertes aktuell anzuwenden ist.

24. Verfahren nach Anspruch 23, bei dem die unterschiedlichen Brennerstufen bei der Ermittlung der Brennstoffleistung berücksichtigt werden.

25. Verfahren nach einem der vorherigen Ansprüche, bei dem die Heizarbeit $Q_{d,ist}$ im Beobachtungszeitraum bestimmt wird, indem von der Brennstoffarbeit $Q_{Br,d}$ die gesamte Verlustarbeit $Q_{V,d}$ subtrahiert wird.

26. Verfahren nach Anspruch 25, bei dem ein Bestandteil der Verlustarbeit $Q_{V,d}$ die Aufheizverlustarbeit $Q_{Verlust}$ (KS) während der Kaltstartphasen der Heizanlage ist.

27. Verfahren nach Anspruch 25 oder 26, bei dem ein Bestandteil der Verlustarbeit $Q_{V,d}$ die Aufheizverlustarbeit $Q_{Verlust}$ (WS) während der Warmstartphasen der Heizanlage ist.

28. Verfahren nach Anspruch 25, 26 oder 27, bei dem ein Bestandteil der Verlustarbeit $Q_{V,d}$ durch Bereitschaftsverluste und/oder Abgasverluste im quasistationären Bereich und/oder Strahlungsverluste gebildet wird.

29. Verfahren nach Anspruch 25, 26, 27 oder 28, bei dem die Verlustarbeit $Q_{V,d}$ die Summe aus der Aufheizverlustarbeit $Q_{Verlust}$ (KS) bei einem Kaltstart und der Aufheizverlustarbeit $Q_{Verlust}$ (WS) bei einem Warmstart der Heizanlage ist.

30. Verfahren nach einem der vorherigen Ansprüche, bei dem bei der Bestimmung des Wirkungsgrades $\eta_k$ zur Berechnung der mittleren Heizarbeit $Q_{d,stat}$ für die gesamte Brennerlaufzeit im quasi-stationären Bereich, Strahlungsenergieverluste und/oder Konvektionsenergieverluste und/oder Abgasenergieverluste und/oder Energieverluste aufgrund unverbrannter Gase berücksichtigt werden.

31. Verfahren nach einem der vorherigen Ansprüche, bei dem als zusätzlicher Schritt das Ermitteln der einzustellenden Brennerleistung aus Wärmeanschlusswert und Wirkungsgrad vorgesehen ist.

32. Verfahren nach einem der vorherigen Ansprüche 1 bis 31, bei dem ein Teil der Messwerte diskontinuierlich gemessen und mit einem aus der Heizanlage selbst auslesbaren Teil der Messwerte kombiniert wird.

33. Verfahren nach einem der Ansprüche 1 bis 31, bei dem ein Teil der Messwerte kontinuierlich gemessen und mit einem aus der Heizanlage selbst auslesbaren Teil der Messwerte kombiniert wird.

34. Verfahren nach einem der vorherigen Ansprüche, bei dem mittels Durchflusssensoren die Brauchwasserabnahmemenge und/oder der Brennstofffluss gemessen wird.

35. Verfahren nach Anspruch 34, bei dem aus Brauchwasserabnahmemenge und/oder Brennstofffluss in Kombination mit Vor- und Rücklauftemperaturverlauf eines Speicherladekreises Teilverluste und/oder Korrekturwerten berechnet werden.

36. Verfahren nach einem der vorherigen Ansprüche, bei dem die Wärmeeinträge externer und interner weiterer Wärmequellen in das Gebäude ermittelt und in Anrechnung gebracht werden.

37. Verfahren nach Anspruch 36, bei dem durch den Brennwerteffekt bei der Wärmeerzeugung erzielte Wärmeeinträge in das Gebäude über die Bestimmung der Kondensatmenge ermittelt und in Anrechnung gebracht werden.

38. Verfahren nach Anspruch 37, bei dem der Brennwerteffekt bei der Wärmeerzeugung über die Bestimmung der Größen Sauerstoffkonzentration, Rücklauftemperatur und Abgastemperatur ermittelt und in Anrechnung gebracht wird.

39. Verfahren nach einem der vorherigen Ansprüche, bei dem die Heizarbeit für Brauchwasser bei ausgeschalteter Heizung ermittelt und in Anrechnung gebracht wird.

40. Verfahren nach einem der vorherigen Ansprüche, bei dem die Heizarbeit für die Brauchwassererwärmung im Messzyklus $Q_{d,w}$ über die Ladung des Brauchwasserspeichers mittels messtechnischer Erfassung der Speicherladezeit über den Verlauf der Vor- und Rücklauftemperaturen des Speicherladekreises, der Temperaturanhebung im Speicher über die Differenz der Rücklauftemperatur pro Speicherladung und der Verknüpfung der Größen mit dem Speichervolumen in Anrechnung gebracht wird.

41. Verfahren nach einem der vorherigen Ansprüche, bei dem mittels Mehrfachmessung bei unterschiedlichen Außentemperaturen über die Bestimmung der Gebäudekennlinie die gebäudespezifische Heizgrenztemperatur bestimmt wird.

42. Anordnung zur Durchführung des Verfahrens nach einem der Ansprüche 1 bis 41, mit
einer Datenerfassungseinrichtung zum Erfassen von Brennstoffleistung, Innentemperatur und Verbrennungslufttemperatur jeweils über die/der Zeit in einem Beobachtungszeitraum von bestimmter Beobachtungsdauer;
einer Messeinrichtung zum Messen von zumindest Abgaskonzentrationsparameter, Abgastemperatur und Außentemperatur jeweils über der Zeit in dem Beobachtungszeitraum; und
einer Auswerteeinrichtung zum Ermitteln des Wirkungsgrades der Heizanlage über der Zeit aus Abgaskonzentrationsparameter, Abgastemperatur und Verbrennungslufttemperatur jeweils über der Zeit in dem Beobachtungszeitraum, zum Ermitteln der mittleren Außentemperatur in dem Beobachtungszeitraum; zum Ermitteln einer bei der mittleren Außentemperatur erzeugten mittleren Heizarbeit aus der Brennstoffleistung über der Zeit und dem Wirkungsgrad der Heizanlage über der Zeit in dem Beobachtungszeitraum; zum Ermitteln einer bei einer minimalen Außentemperatur zu erzeugenden maximalen Heizarbeit aus der mittleren Heizarbeit, einer minimalen Außentemperatur, einer mittleren Innentemperatur und der mittleren Außentemperatur in dem Beobachtungszeitraum zum Ermitteln des Wärmeanschlusswertes der Heizungsanlage aus der maximalen Heizarbeit und der Beobachtungsdauer.

43. Anordnung nach Anspruch 42, bei der die Auswerteeinrichtung die einzustellende Brennerleistung aus Wärmeanschlusswert und Wirkungsgrad ermittelt.

44. Anordnung nach Anspruch 42 oder 43, bei der Messeinrichtung und Auswerteeinrichtung räumlich voneinander getrennt sind und jeweils eine Schnittstelle zur Datenübermittlung aufweisen.

45. Anordnung nach Anspruch 42 oder 43, bei der die Messeinrichtung einen Speicher zu Zwischenspeichern von Messdaten besitzt.

46. Anordnung nach Anspruch 44 oder 45, bei der die Schnittstellen drahtlos arbeiten.

47. Anordnung nach einem der Ansprüche 42 bis 45, bei der mehrere Messeinrichtungen vorgesehen sind, die zur Auswerteeinrichtung Daten übermitteln, wobei diese Messeinrichtungen über einen eigenen Datenspeicher verfügen, um die Daten separat zu erfassen und für eine weitere Auswertung zwischenzuspeichern.

48. Anordnung nach einem der Ansprüche 42 bis 47, bei der die Messung von zumindest Abgastemperatur und Außentemperatur synchron und diskret zu bestimmten Abtastzeitpunkten erfolgt.

**Claims**

1. A method of determining the heat contact value of a building heated by a heating system, wherein the heating system is fired by fuel so as to produce exhaust gas and an external temperature and an internal temperature occur with the building, with the steps:

determination of the fuel capacity, the internal temperature and the combustion air temperature in each case over time in an observation period of specified duration;
measurement of the exhaust gas concentration parameter, the exhaust gas temperature and the external temperature in each case over time in the observation period;
determination of the efficiency of the heating system over time from the exhaust gas concentration parameter, the exhaust gas temperature and the combustion air temperature in each case over time in the observation period;
determination of the average external temperature and the average internal temperature in the observation period from the external temperature and the internal temperature;
determination of an average heating performance produced in the case of the average external temperature from the fuel capacity over time and the efficiency of the heating system over time in the observation period;
determination of a maximum heating performance to be produced in the case of a minimum external temperature from the average heating performance, the minimum external temperature, the average internal temperature and the average external temperature in the observation period, and
determination of the heat contact value of the building from the maximum heating performance and the duration of observation.

2. A method according to claim 1, in which the concentration of oxygen in the exhaust gas is measured as the exhaust gas concentration parameter.

3. A method according to claim 1, in which the concentration of carbon dioxide in the exhaust gas is measured and evaluated as the exhaust gas concentration parameter.

4. A method according to claim 3, in which the efficiency $\eta_k$ of the heating system is determined with reference to a country-specific equation.

5. A method according to claim 4, in which the efficiency $\eta_k$ of the heating system is determined with reference to the equation

$$\eta_k = 1 - (T_{Abgas,ist} - T_{Luft,ist}) \cdot ((KoeffA_2 / (21 - O_{2mess}) + KoeffB / 100)$$

in which $O_{2mess}$ represents the current concentration of oxygen in the exhaust gas, $T_{Abgas, ist}$ represents the current exhaust gas temperature, $T_{Luft, ist}$ represents the current combustion air temperature and $Koeff_{A2}$, $Koeff_B$ represent coefficients dependent upon the fuel and characterizing the fuel capacity.

6. A method according to claim 5, in which oil or gas is provided as the fuel, the coefficient $Koeff_{A2}$ is selected to be between 0.63 and 0.68 and the coefficient $Koeff_B$ is selected to be between 0.007 and 0.011.

7. A method according to claim 4, 5 or 6, in which a correction value, which is dependent upon the operating behaviour of the heating system as well as the location and nature of the installation thereof, is deducted from the efficiency determined.

8. A method according to any one of claims 1 to 7, in which the average heating performance is determined from the product - integrated over the observation period - of the fuel capacity over time and the efficiency over time.

9. A method according to any one of claims 1 to 7, in which the average efficiency in the observation period and the average fuel capacity are determined in order to determine the average heating performance, wherein the average efficiency and the average fuel capacity are then multiplied with each other and with the duration of observation.

10. A method according to any one of claims 1 to 9, in which the maximum heating performance is calculated with reference to the equation

$$Q_{Heiz,max} = Q_{Heiz,mittel} (T_{Heizgrenz} - T_{außen,min}) / (T_{Heizgrenz} - T_{außen,mittel})$$

in which $Q_{Heiz, max}$ represents the maximum heating performance, $Q_{Heiz, mittel}$ represents the average heating performance in the observation period, $T_{Heizgrenz}$ represents the heating threshold temperature, $T_{außen, min}$ represents the minimum external temperature and $T_{außen, mittel}$ represents the average external temperature measured in order to determine the heat contact value in the observation period.

11. A method according to any one of claims 1 to 10, in which the heat contact value P is calculated with reference to the equation

$$P = Q_{Heiz,max} / \tau$$

in which $Q_{Heiz, max}$ represents the maximum heating performance and $\tau$ represents the duration of observation.

12. A method according to any one of claims 1 to 11, in which the duration of observation amounts to 24 hours or an integral multiple of 24 hours.

**13.** A method according to claim 12, in which the duration of observation amounts to 168 hours.

**14.** A method according to claim 12, in which the duration of observation amounts to less than 24 hours and at least part of the measurement values is projected to a duration of observation of 24 hours.

**15.** A method according to any one of the preceding claims, in which multiple measurements are carried out at various external temperatures.

**16.** A method according to any one of the preceding claims, in which the heating system has a household hot water supply, wherein in order to determine the heat contact value a correction value corresponding to the heating performance for the household hot water supply is subtracted from the average heating performance and this correction value is added again during the calculation of the maximum heating performance.

**17.** A method according to any one of the preceding claims, in which the internal temperature is measured over time in the observation period, and, in order to establish the heating threshold, the external temperature is set equal to the average internal temperature in the observation period.

**18.** A method according to any one of the preceding claims, in which the momentary flow of fuel is measured and the fuel performance is determined therefrom in the observation period.

**19.** A method according to claim 18, in which the fuel performance is determined in accordance with the equation

$$Q_{Br,ist} = H_U \, V_{BG}$$

in which $Q_{Br, ist}$ represents the fuel performance, $H_U$ represents the calorific value dependent upon the fuel and $V_{BG}$ represents the flow of fuel.

**20.** A method according to any one of the preceding claims, in which the measurement of at least the exhaust gas temperature and the external temperature is carried out in a synchronous and discrete manner at specified sensing times.

**21.** A method according to any one of the preceding claims, in which the heating system is clock-timed, wherein a deduction is made from the time pattern and/or the current values of the exhaust gas concentration parameter and/or the exhaust gas temperature as to whether the burner is currently in operation or not.

**22.** A method according to claim 21, in which in the observation period the switch-on times of the burner are linked to the momentary fuel capacity for the fuel performance resulting for the observation period.

**23.** A method according to claim 21 or 22, in which the heating system has at least two combustion stages with different fuel capacities, wherein a deduction is made from the time pattern and/or the current values of the exhaust gas concentration parameter and/or the exhaust gas temperature as to which of the at least two combustion stages is currently in operation and which fuel performance should thus currently be applied when determining the heat contact value.

**24.** A method according to claim 23, in which the different burner stages are taken into consideration when determining the fuel performance.

**25.** A method according to any one of the preceding claims, in which the heating performance $Q_{d, ist}$ is determined in the observation period by the total loss performance $Q_{V,d}$ being subtracted from the fuel performance $Q_{Br,d}$.

**26.** A method according to claim 25, in which a component part of the loss performance $Q_{V,d}$ is the heating loss performance $Q_{Verlust}$ (KS) during the cold starting phases of the heating system.

**27.** A method according to claim 25 or 26, in which a component part of the loss performance $Q_{V,d}$ is the heating loss performance $Q_{Verlust}$ (WS) during the warm starting phases of the heating system.

28. A method according to claim 25, 26 or 27, in which a component part of the loss performance $Q_{V,d}$ is formed by preparation losses and/or exhaust gas losses in the quasi-stationary range and/or radiation losses.

29. A method according to claim 25, 26, 27 or 28, in which the loss performance $Q_{V,d}$ is the sum of the heating loss performance $Q_{Verlust}$ (KS) during a cold start and the heating loss performance $Q_{Verlust}$ (WS) during a warm start of the heating system.

30. A method according to any one of the preceding claims, in which radiation energy losses and/or convection energy losses and/or exhaust gas energy losses and/or energy losses on account of unburnt gases are taken into consideration when determining the efficiency $\eta_k$ in order to calculate the average heating performance $Q_{d,stat}$ for the entire operating time of the burner in the quasi-stationary range.

31. A method according to any one of the preceding claims, in which the determination of the burner performance- to be set - from the heat contact value and the efficiency is provided as an additional step.

32. A method according to any one of the preceding claims 1 to 31, in which part of the measurement values are measured discontinuously and combined with part of the measurement values capable of being read out from the heating system itself.

33. A method according to any one of claims 1 to 31, in which part of the measurement values are measured continuously and combined with part of the measurement values capable of being read out from the heating system itself.

34. A method according to any one of the preceding claims, in which the quantity of household water removed and/ or the flow of fuel is or are measured by means of through-flow sensors.

35. A method according to claim 34, in which partial losses and/or correction values are calculated from the quantity of household water removed and/or the flow of fuel in combination with the forward or reverse temperature pattern of a store loading circuit.

36. A method according to any one of the preceding claims, in which the heat inputs of further external and internal heat sources into the building are determined and are taken into account.

37. A method according to claim 36, in which heat inputs - achieved by the calorific value effect during the production of heat - into the building are determined by determining the quantity of condensate and are taken into account.

38. A method according to claim 37, in which the calorific value effect during the production of heat is determined by determining the magnitudes of the concentration of oxygen, the return flow temperature and the exhaust gas temperature and is taken into account.

39. A method according to any one of the preceding claims, in which the heating performance for household water is determined with the heating switched off and is taken into account.

40. A method according to any one of the preceding claims, in which the heating performance for heating the household water in the measurement cycle $Q_{d,w}$ by way of the loading of the household water store is taken into account by means of detecting by measurement the store loading times by way of the pattern of the forward and reverse flow temperatures of the store loading circuit, the temperature rise in the store by way of the difference of the reverse flow temperature per store loading and the linking of the magnitudes with the store volume.

41. A method according to any one of the preceding claims, in which the building-specific heating threshold temperature is determined by means of multiple measurement at different external temperatures by way of determining the building characteristic line.

42. An arrangement for performing the method according to any one of claims 1 to 41, with
a data detection device for detecting the fuel capacity, the internal temperature and the combustion air temperature in each case over time in an observation period of specified duration;
a measuring instrument for measuring at least the exhaust gas concentration parameter, the exhaust gas temperature and the external temperature in each case over time in the observation period, and
an evaluation device in order to determine the efficiency of the heating system over time from the exhaust gas concentration parameter, the exhaust gas temperature and the combustion air temperature in each case over time in the observation period, in order to determine the average external temperature in the observation period; in order to determine an average heating performance produced at the average external temperature from the fuel performance over time and the efficiency of the heating system over time in the observation period; in order to determine a maximum heating performance to be produced at a minimum external temperature from the average heating performance, a minimum external temperature, an average internal temperature and the average external temperature in the observation period in order to determine the heat contact value of the heating system from the maximum heating performance and the duration of observation.

43. An arrangement according to claim 42, in which the evaluation device determines the burner performance - to be set - from the heat contact value and the efficiency.

44. An arrangement according to claim 42 or 43, in which the measuring instrument and the evaluation device are spatially separate from each other and in each case have an interface for the transmission of data.

45. An arrangement according to claim 42 or 43, in which the measuring instrument has a store for the temporary storage of measurement data.

46. An arrangement according to claim 44 or 45, in which the interfaces operate by wireless.

47. An arrangement according to any one of claims 42 to 45, in which a plurality of measuring instruments are provided which transmit data to the evaluation device, wherein these measuring instruments have a separate data store in order to detect the data separately and to store them temporarily for further evaluation.

48. An arrangement according to any one of claims 42 to 47, in which the measurement of at least the exhaust gas temperature and the external temperature is carried out in a synchronous and discrete manner at specified sensing times.

**Revendications**

1. Procédé pour déterminer la charge thermique d'un bâtiment chauffé par une installation de chauffage, cette installation de chauffage étant chauffée par du combustible dégageant des gaz de combustion et l'immeuble a une température extérieure et une température intérieure, procédé comprenant les étapes suivantes :

   - déterminer la puissance calorifique du combustible, la température intérieure et la température de l'air comburant, chaque fois en fonction du temps dans une période d'observation d'une durée d'observation donnée,
   - mesurer les paramètres de concentration des gaz de combustion, la température des gaz de combustion et la température extérieure, chaque fois en fonction du temps pendant la durée d'observation,
   - déterminer le rendement de l'installation de chauffage en fonction du temps à partir des paramètres de concentration des gaz de combustion, de la température des gaz de combustion et de la température de l'air combiné, respectivement en fonction du temps pendant la durée d'observation,
   - déterminer la température extérieure moyenne et la température intérieure moyenne dans l'intervalle d'observation à partir de la température extérieure et de la température intérieure,
   - déterminer un travail de chauffage moyen généré pour une température extérieure moyenne à partir de la puissance du carburant en fonction du temps et du rendement de l'installation de chauffage en fonction du temps dans la durée d'observation,
   - déterminer le travail de chauffage maximum réalisable pour une température extérieure minimale à partir du travail moyen de chauffage, de la température extérieure minimale, de la température intérieure minimale et de la température extérieure moyenne pendant la durée d'observation, et
   - déterminer la valeur du raccordement thermique de l'immeuble à partir du travail de chauffage maximum et de la durée d'observation.

2. Procédé selon la revendication 1,
   selon lequel
   comme paramètre de concentration des gaz de combustion, on mesure la concentration en oxygène des gaz de combustion.

**3.** Procédé selon la revendication 1,
**caractérisé en ce que**
comme paramètre de concentration des gaz de combustion, on mesure et on exploite la concentration en dioxyde de carbone contenu dans les gaz de combustion.

**4.** Procédé selon la revendication 3,
**caractérisé en ce qu'**
on détermine le rendement $\eta_K$ de l'installation de chauffage à l'aide d'une équation spécifique à la région.

**5.** Procédé selon la revendication 4,
selon lequel
on détermine le rendement $\eta_K$ de l'installation de chauffage en appliquant l'équation $\eta_K = 1 - (T_{\text{gaz de combustion, réel}} - T_{\text{air, réel}}) \cdot ((\text{Coeff}_{A2} / (21 - O_{2mes}) + \text{Coeff}_B) / 100)$,
$O_{2mes}$ représentant la concentration actuelle d'oxygène dans les gaz de combustion,
$T_{\text{gaz de combustion, réel}}$ représente la température actuelle des gaz de combustion ;
$T_{\text{air, réel}}$ est la température actuelle de l'air comburant,
$\text{Coeff}_{A2}$, $\text{Coeff}_{B2}$ représentent en fonction du carburant, la puissance calorifique **caractérisée par** les coefficients.

**6.** Procédé selon la revendication 5,
selon lequel
comme combustible, on utilise du mazout ou un gaz, le coefficient $\text{Coeff}_{A2}$ est choisi compris entre 0,63 et 0,68 et le $\text{Coeff}_B$ est choisi compris entre 0,007 et 0,011.

**7.** Procédé selon les revendications 4, 5 ou 6,
selon lequel
on retranche une valeur corrective du rendement obtenu, cette valeur corrective dépendant du comportement de fonctionnement de l'installation de chauffage et du lieu de l'installation, ainsi que de sa nature.

**8.** Procédé selon l'une des revendications 1 à 7,
**caractérisé en ce que**
le travail de chauffage moyen se détermine à partir du produit intégré sur la durée d'observation et correspondant à la puissance du combustible en fonction du temps et le rendement en fonction du temps.

**9.** Procédé selon l'une des revendications 1 à 7,
**caractérisé en ce que**
pour déterminer le travail de chauffage moyen, on détermine le rendement moyen pendant la durée d'observation et la puissance moyenne du combustible et ensuite, on multiplie le rendement moyen et la puissance moyenne du combustible l'un avec l'autre et avec la durée d'observation.

**10.** Procédé selon l'une des revendications 1 à 9,
selon lequel
le travail de chauffage maximum se calcule à l'aide de l'équation suivante :

$$Q_{\text{chauffage, max}} = Q_{\text{chauffage, moyen}} (T_{\text{limite de chauffage}} - T_{\text{extérieure, min}}) / T_{\text{limite de chauffage}} - T_{\text{extérieure, moyenne}}),$$

relation dans laquelle :

- $Q_{\text{chauffage, max}}$ est le travail de chauffage maximal,
- $Q_{\text{chauffage, moyen}}$ représente le travail de chauffage moyen dans la durée d'observation,
- $T_{\text{limite de chauffage}}$ désigne la température de chauffage,
- $T_{\text{extérieure, min}}$ désigne la température extérieure minimale, et
- $T_{\text{extérieure, moyenne}}$ représente la température extérieure moyenne mesurée pour déterminer la durée d'observation.

**11.** Procédé selon l'une des revendications 1 à 10,

selon lequel
le calcul de la charge thermique P se fait à l'aide de l'équation $P = Q_{chauffage, max}/\tau$, relation dans laquelle $Q_{chauffage, max}$ représente le travail de chauffage maximum et $\tau$ représente la durée d'observation.

**12.** Procédé selon l'une des revendications 1 à 11,
**caractérisé en ce que**
la durée d'observation est de 24 heures ou un multiple entier de 24 heures.

**13.** Procédé selon la revendication 12,
**caractérisé en ce que**
la durée d'observation est de 168 heures.

**14.** Procédé selon la revendication 12,
**caractérisé en ce que**
la durée d'observation est inférieure à 24 heures et au moins une partie des valeurs de mesure, est calculée pour une durée d'observation de 24 heures.

**15.** Procédé selon l'une des revendications précédentes,
**caractérisé en ce qu'**
on effectue des mesures multiples à des températures extérieures différentes.

**16.** Procédé selon l'une des revendications précédentes,
**caractérisé en ce que**
l'installation de chauffage comporte une préparation d'eau chaude sanitaire et pour déterminer la charge thermique, on retranche du travail de chauffage moyen, une valeur de correction correspondant au travail de chauffage de la préparation d'eau chaude sanitaire et cette valeur de correction est de nouveau additionnée lorsqu'on calcule le travail de chauffage maximum.

**17.** Procédé selon l'une des revendications précédentes,
**caractérisé en ce qu'**
on mesure la température intérieure en fonction du temps pour l'espace d'observation et pour fixer la limite de chauffage, on prend la température extérieure que l'on rend égale à la température intérieure moyenne dans la durée d'observation.

**18.** Procédé selon l'une des revendications précédentes,
**caractérisé en ce qu'**
on mesure le débit instantané de carburant et on en déduit le travail du carburant dans la durée d'observation.

**19.** Procédé selon la revendication 18,
**caractérisé en ce que**
pour déterminer le travail du carburant, on applique l'équation $Q_{Br, réel} = Hu \, V_{BG}$, dans laquelle $Q_{Br, réel}$ représente le travail du combustible, Hu représente la puissance calorifique du carburant et $V_{BG}$ représente le débit de combustible.

**20.** Procédé selon l'une des revendications précédentes,
**caractérisé en ce que**
la mesure au moins de la température des gaz de combustion et de la température extérieure, se fait de manière synchrone et de façon discrète à des points de détection déterminés.

**21.** Procédé selon l'une des revendications précédentes,
**caractérisé en ce qu'**
on cadence le fonctionnement de l'installation de chauffage et à partir de l'évolution en fonction du temps et/ou des valeurs actuelles du paramètre de concentration de gaz de combustion et/ ou de la température des gaz de combustion, on en déduit si actuellement le brûleur fonctionne ou non.

**22.** Procédé selon la revendication 21,
**caractérisé en ce que**
dans la période d'observation, on combine les temps de branchement du brûleur à la puissance calorifique instantanée avec le travail de combustion résultant de la durée d'observation.

**23.** Procédé selon la revendication 21 ou 22,
**caractérisé en ce que**
l'installation de chauffage présente au moins deux étages de combustion avec des puissances calorifiques différentes et à partir de l'évolution dans le temps et/ou des valeurs actuelles du paramètre de concentration des gaz de combustion et/ou de la température des gaz de combustion, on en déduit celui des deux niveaux de combustion appliqué actuellement et la puissance calorifique qui doit être actuellement appliquée pour déterminer la charge thermique.

**24.** Procédé selon la revendication 23,
**caractérisé en ce qu'**
on tient compte des différents niveaux de combustion pour déterminer la puissance spécifique du combustible.

**25.** Procédé selon l'une des revendications précédentes,
selon lequel
on détermine le travail calorifique $Q_{d, réel}$ dans la période d'observation en ce que l'on retranche tout le travail perdu $Q_{V, d}$ du travail spécifique du combustible $Q_{Br, d}$.

**26.** Procédé selon la revendication 25,
**caractérisé en ce qu'**
une composante du travail perdu $Q_{V, d}$ est le travail perdu de chauffage $Q_{perte}$ (KS) pendant les phases de démarrage à froid de l'installation de chauffage.

**27.** Procédé selon la revendication 25 ou 26,
**caractérisé en ce qu'**
une composante du travail perdu $Q_{V, d}$ est le travail perdu de réchauffage $Q_{perte}$ (WS) pendant les phases de démarrage de chauffage de l'installation de chauffage.

**28.** Procédé selon les revendications 25, 26 ou 27,
selon lequel
une composante du travail perdu $Q_{V, d}$ correspond aux pertes de préparation et/ou aux pertes de gaz de combustion dans la plage quasi-stationnaire et/ou pertes par rayonnement.

**29.** Procédé selon les revendications 25, 26, 27 ou 28,
**caractérisé en ce que**
le travail perdu $Q_{V, d}$ est la somme du travail perdu de réchauffage $Q_{perte}$ (KS) au démarrage à froid et au travail perdu de chauffage $Q_{perte}$ (WS) pour un démarrage à chaud de l'installation de chauffage.

**30.** Procédé selon l'une des revendications précédentes,
**caractérisé en ce que**
pour déterminer le rendement $\eta_K$ pour calculer le travail de chauffage moyen $Q_{d, stat}$ pendant toute la période de fonctionnement du brûleur, en mode quasi-stationnaire, on tient compte des pertes d'énergie par rayonnement et/ou des pertes d'énergie par convection et/ou des pertes d'énergie par les gaz de combustion et/ou les pertes d'énergie liées aux gaz imbrûlés.

**31.** Procédé selon l'une des revendications précédentes,
**caractérisé par**
une étape supplémentaire consistant à déterminer la puissance du brûleur à régler à partir des pertes de raccordement thermique et du rendement.

**32.** Procédé selon l'une des revendications 1 à 31,
**caractérisé en ce qu'**
une partie des valeurs de mesure est obtenue par des mesures discontinues et elle est combinée à une partie des valeurs de mesure qui se lisent directement sur l'installation de chauffage.

**33.** Procédé selon l'une des revendications 1 à 31,
**caractérisé en ce qu'**

une partie des valeurs de mesure se mesure en continu et elle est combinée à une partie des valeurs de mesure extraites directement de l'installation de chauffage.

34. Procédé selon l'une des revendications précédentes,
**caractérisé en ce qu'**
à l'aide de capteurs de débit, on mesure la consommation d'eau sanitaire et/ou du débit de combustible.

35. Procédé selon la revendication 34,
**caractérisé en ce qu'**
à partir de la quantité d'eau sanitaire et/ou du débit de carburant en combinaison avec l'évolution de la température aller et de la température retour, d'une boucle de charge on calcule des pertes partielles et/ou des valeurs de correction.

36. Procédé selon l'une des revendications précédentes,
**caractérisé en ce qu'**
on détermine les apports calorifiques de manière externe et interne à partir d'autres sources de chaleur dans l'immeuble et on en tient compte dans le calcul.

37. Procédé selon la revendication 36,
**caractérisé en ce qu'**
on détermine des apports calorifiques dans l'immeuble en déterminant la quantité de condensat en tenant compte de l'effet de la puissance calorifique pour générer la chaleur et on en tient compte dans les calculs.

38. Procédé selon la revendication 37,
**caractérisé en ce que**
on détermine l'effet de la puissance calorifique pour générer la chaleur en fonction de la détermination des grandeurs telles que concentration en oxygène, température de retour et température des gaz de combustion et on en tient compte dans les calculs.

39. Procédé selon l'une des revendications précédentes,
**caractérisé en ce qu'**
on détermine le travail de réchauffage de l'eau sanitaire si le chauffage coupé et on en tient compte dans les calculs.

40. Procédé selon l'une des revendications précédentes,
**caractérisé en ce que**
le travail de réchauffage pour la préparation d'eau chaude sanitaire dans le cycle de mesure $Q_{d,\,w}$ se détermine en fonction de la charge de l'accumulateur d'eau chaude sanitaire par une saisie en technique des mesures des temps de charge d'accumulation selon l'évolution des températures aller et retour du circuit de charge d'accumulation, l'élévation de température dans l'accumulateur en fonction de la différence entre la température de retour par charge d'accumulation et la combinaison des grandeurs avec le volume d'accumulation.

41. Procédé selon l'une des revendications précédentes,
**caractérisé en ce que**
par une mesure multiple à des températures extérieures différentes pour la détermination des courbes caractéristiques d'immeuble, on détermine la température limite de chauffage spécifique à l'immeuble.

42. Montage pour la mise en oeuvre du procédé selon l'une des revendications 1 à 41, comportant :

- une installation de saisie de données pour saisir la puissance calorifique, la température intérieure et la température de l'air comburant chaque fois en fonction du temps ou d'une période d'observation pour une durée d'observation déterminée,
- une installation de mesure pour mesurer au moins un paramètre de concentration des gaz de combustion, la température des gaz de combustion et la température extérieure en fonction du temps dans la période d'observation, et
- une installation d'exploitation pour déterminer le rendement de l'installation de chauffage en fonction du temps à partir du paramètre de concentration des gaz de combustion, la température des gaz de combustion et de la température de l'air comburant en fonction du temps dans la période d'observation, pour déterminer la température extérieure moyenne dans la période d'observation, pour déterminer un travail de chauffage moyen généré

31

pour la température extérieure moyenne à partir de la puissance calorifique en fonction du temps et du rendement de l'installation de chauffage en fonction du temps dans la période d'observation ; pour déterminer un travail de chauffage maximum pour une température extérieure minimale à partir du travail de chauffage moyen, une température extérieure minimale et une température intérieure moyenne ainsi que de la température extérieure moyenne dans la période d'observation pour déterminer la charge thermique de l'installation de chauffage à partir du travail de chauffage maximum et de la période d'observation.

**43.** Montage selon la revendication 42,
**caractérisé en ce que**
l'installation d'exploitation détermine la puissance calorifique à régler à partir de la charge thermique et du rendement.

**44.** Montage selon la revendication 42 ou 43,
**caractérisé en ce que**
l'installation de mesure et l'installation d'exploitation sont séparées dans l'espace et ont chacune une interface pour la transmission des données.

**45.** Montage selon la revendication 42 ou 43,
**caractérisé en ce que**
l'installation de mesure comporte une mémoire pour enregistrer de façon intermédiaire les données de mesure.

**46.** Montage selon la revendication 44 ou 45,
**caractérisé en ce que**
les interfaces fonctionnent par transmission sans fil.

**47.** Montage selon l'une des revendications 42 à 45,
**caractérisé par**
plusieurs installations de mesure transmettant des données à l'installation d'exploitation, les installations de mesure ayant une mémoire de données, propre, pour saisir séparément les données et les enregistrer de façon intermédiaire pour la suite de leur exploitation.

**48.** Montage selon l'une des revendications 42 à 47,
**caractérisé en ce que**
la mesure d'au moins une température de gaz de combustion et la température extérieure, sont faites de manière synchrone et discrète à des instants de temps de détection déterminés.

1

$P_{Gewinn,ist}$

13

7

$P_{Helz,ist}$

9

4

$P_{Verlust,ist}$

12

8

11

10

15

$P_{Br,ist}$

2

3

6

5

14

## FIG 1

$Q_{d,max}$

$Q_{d,ist}$

$Q_{dw}$

$T_{außen,min}$

$T_{außen,ist}$

$T_{außen,Messgrenze}$

$T_{außen,Heizgrenze}$

$T_{innen,ist} = T_{außen,ist}$

## FIG 2

EP 1 730 482 B1

Start

↓

Messen von Abgaskonzentrationsparameter, Abgastemperatur, Außentemperatur, Verbrennungslufttemperatur, Vor- und Rücklauftemperatur der Heizkreise und ggf. Innentemperatur und Bestimmen der Brennstoffleistung jeweils über die/der Zeit in einem bestimmten Beobachtungszeitraum

↓

Ermitteln des Wirkungsgrades der Heizanlage über der Zeit aus den vorher gemessenen Größen über die/der Zeit in dem Beobachtungszeitraum,

↓

Ermitteln der mittleren Außentemperatur im Beobachtungszeitraum

↓

Ermitteln einer bei der mittleren Außentemperatur erzeugten mittleren Heizarbeit aus der Brennstoffleistung über der Zeit und dem Wirkungsgrad der Heizanlage über der Zeit im Beobachtungszeitraum

↓

Ermitteln einer bei einer minimalen Außentemperatur zu erzeugenden maximalen Heizarbeit aus der mittleren Heizarbeit, einer minimalen Außentemperatur, der Heizgrenztemperatur bzw. mittleren Innentemperatur und der mittleren Außentemperatur im Beobachtungszeitraum

↓

Ermitteln des Wärmeanschlusswertes des Gebäudes aus maximaler Heizarbeit und Beobachtungsdauer

↓

Ermitteln der einzustellenden Brennerleistung aus Wärmeanschlusswert und Wirkungsgrad bzw. Verlusten der Wärmeerzeugung im quasistationären Zustand

↓

Ergebnisausgabe

## FIG 3

34

**EP 1 730 482 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3730529 A1
- DE 3626281 C2
- DE 2753485
- US 4054408 A
- US 4621528 A
- DE 10062581

35